(19) **Europäisches Patentamt European Patent Office Office européen des brevets**

(11) **EP 4 538 994 A1**

(12) **EUROPEAN PATENT APPLICATION**

(43) Date of publication:
16.04.2025 Bulletin 2025/16

(21) Application number: 24206066.3

(22) Date of filing: 11.10.2024

(51) International Patent Classification (IPC):
$G06V\ 10/82^{(2022.01)}$    $G06V\ 10/86^{(2022.01)}$
$G06V\ 20/58^{(2022.01)}$    $G06V\ 20/56^{(2022.01)}$

(52) Cooperative Patent Classification (CPC):
G06V 10/82; G06V 10/86; G06V 20/582;
G06V 20/588; Y02T 10/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.10.2023 CN 202311315469

(71) Applicant: Beijing Horizon Information
Technology Co., Ltd.
Beijing 100094 (CN)

(72) Inventors:
• SONG, Liang
  Beijing, 100094 (CN)
• YAN, Bo
  Beijing, 100094 (CN)
• XIE, Jiangbiao
  Beijing, 100094 (CN)

(74) Representative: Dehns Germany Partnerschaft
mbB
Theresienstraße 6-8
80333 München (DE)

(54) **METHOD AND APPARATUS FOR PREDICTING ASSOCIATION RELATIONSHIP BETWEEN SIGN AND LANE, AND ELECTRONIC DEVICE**

(57) Disclosed are a method and an apparatus for predicting an association relationship between a sign and a lane, and an electronic device. The method comprises determining driving environment data collected by the vehicle during driving process; determining input graph structure data representing an initial relationship between traffic signs and a lane based on the driving environment data; and processing the input graph structure data based on a graph neural network model to obtain an association relationship between a preset type of traffic sign among the traffic signs and the lane. The technical solution of the present disclosure does not require manual design of threshold parameters and algorithm flow in the process of processing the input graph structure data by means of a graph neural network model, and therefore can improve the efficiency and accuracy of determining the association relationship between traffic lights and a lane and ensure safe driving.

EP 4 538 994 A1

**Description**

**FIELD OF THE PRESENT DISCLOSURE**

The present disclosure relates to the technical field of intelligent driving, and more particularly, to a method and an apparatus for predicting association relationship between a sign and a lane, and an electronic device.

**BACKGROUND OF THE PRESENT DISCLOSURE**

Currently, a vehicle in an assisted driving or automatic driving state can select a correct traffic light by determining an association relationship between the traffic light and a lane, thereby performing a corresponding response operation based on a signal (indicating a state of the traffic light, e.g., red light or green light, etc.) emitted by the traffic light.

In the prior art, an association relationship between the traffic light and the lane is usually determined by manually designing a threshold parameter and an algorithm flow. Therefore, a lot of manual editing and checking work is required, which is not only labor-intensive, but also inefficient.

**SUMMARY OF THE PRESENT DISCLOSURE**

At present, the manual design of threshold parameters and algorithm flow to determine the association relationship between a traffic light and a lane requires a lot of manual editing and checking work, which is not only cumbersome, but also inefficient.

In order to solve the above technical problem, the present disclosure provides a method and an apparatus for predicting an association relationship between a sign and a lane, and electronic device, which can improve the efficiency and accuracy of determining the association relationship between the traffic light and the lane, thereby ensuring safe driving.

In a first aspect of the present disclosure, there is provided a method for predicting an association relationship between a sign and a lane, including: determining driving environment data collected by a vehicle during driving process; determining input graph structure data representing an initial relationship between a plurality of traffic signs and the lane based on the driving environment data; and processing the input graph structure data based on a graph neural network model to obtain an association relationship between a preset type of traffic sign among the traffic signs and the lane.

In a second aspect of the present disclosure, there is provided a method for training a graph neural network model, including: determining a plurality of sets of sample input graph structure data and a sample association relationship between a preset type of sample traffic sign among sample traffic signs corresponding to the sample input graph structure data and a sample lane, wherein the sample input graph structure data is used to represent an initial relationship between the sample traffic signs and the sample lane; processing the sample input graph structure data based on an initial graph neural network model to obtain a predicted association relationship between the preset type of sample traffic sign and the sample lane; and iteratively training the initial graph neural network model to obtain a trained graph neural network model by using the predicted association relationship as an initial training output of the initial graph neural network model and the sample association relationship as supervision information.

In a third aspect of the present disclosure, there is provided an apparatus for predicting an association relationship between a sign and a lane, including: a first determination module configured for determining driving environment data collected by a vehicle during driving process; a second determination module configured for determining input graph structure data representing an initial relationship between a plurality of traffic signs and the lane based on the driving environment data; and a prediction module configured for processing the input graph structure data based on a graph neural network model to obtain the association relationship between a preset type of traffic sign among the traffic signs and the lane.

In a fourth aspect of the present disclosure, there is provided a neural network model training apparatus including: a determination module configured for determining a plurality of sets of sample input graph structure data and a sample association relationship between a preset type of sample traffic sign among sample traffic signs corresponding to the sample input graph structure data and a sample lane, wherein the sample input graph structure data is used to represent an initial relationship between the sample traffic sign and the sample lane; a processing module configured for processing the sample input graph structure data based on an initial graph neural network model to obtain a predicted association relationship between the preset type of sample traffic sign and the sample lane; and a training module configured for iteratively training the initial graph neural network model to obtain a trained graph neural network model by using the predicted association relationship as an initial training output of the initial graph neural network model and the sample association relationship as supervision information.

In a fifth aspect embodiment of the present disclosure, there is provided a computer-readable storage medium storing a computer program for executing the method for predicting an association relationship between a sign and a lane of the first aspect or the method for training a graph neural network model of the second aspect.

In a sixth aspect of the present disclosure, there is provided an electronic device, including: a processor, and a memory configured for storing processor-executable instructions; wherein the processor is configured for reading the executable instructions from the memory and executing the instructions to implement the method for predicting an association relationship between signs and a lane of the first aspect described above, or the method for training a graph neural network model of the second aspect described above.

In the embodiment of the present disclosure, when determining the association relationship between the preset type of traffic sign of the traffic signs and the lane, it is only necessary to determine the input graph structure data used for representing the initial relationship between the traffic signs and the lane according to the driving environment data collected by the vehicle during driving process, and then process the input graph structure data by the graph neural network model to obtain the association relationship between the preset type of traffic sign and the lane. Since the graph neural network model is a pre-trained model, it does not require manual design of threshold parameters and algorithm flow in the process of processing the input graph structure data by means of the graph neural network model, and therefore can improve the efficiency and accuracy of determining the association relationship between traffic lights and a lane, thereby ensuring safe driving.

## BRIEF DESCRIPTION OF THE DRAWINGS

Fig. 1 is a schematic scene diagram of a vehicle driving at a traffic intersection according to an exemplary embodiment of the present disclosure.
Fig. 2 is a schematic flow diagram of a method for predicting an association relationship between signs and a lane according to an exemplary embodiment of the present disclosure.
Fig. 3 is a schematic diagram of input graph structure data according to an exemplary embodiment of the present disclosure.
Fig. 4 is a schematic diagram of output graph structure data according to an exemplary embodiment of the present disclosure.
Fig. 5 is a schematic flow diagram of another method for predicting an association relationship between signs and a lane according to an exemplary embodiment of the present disclosure.
Fig. 6 is a schematic flow diagram of yet another method for predicting an association relationship between signs and a lane according to an exemplary embodiment of the present disclosure.
Fig. 7 is a schematic flow diagram of still another method for predicting an association relationship between signs and a lane according to an exemplary embodiment of the present disclosure.
Fig. 8 is a schematic diagram of first graph structure data according to an exemplary embodiment of the present disclosure.
Fig. 9 is a schematic composition structure diagram of a second graph structure data according to an exemplary embodiment of the present disclosure.
Fig. 10 is a schematic flow diagram of still yet another method for predicting an association relationship between signs and a lane according to an exemplary embodiment of the present disclosure.
Fig. 11 is a schematic flow diagram of another method for predicting an association relationship between signs and a lane according to an exemplary embodiment of the present disclosure.
Fig. 12 is a schematic flow diagram of a neural network model training method according to an exemplary embodiment of the present disclosure.
Fig. 13 is a schematic flow diagram of a method for determining multiple sets of sample input graph structure data according to an exemplary embodiment of the present disclosure.
Fig. 14 is a schematic flow diagram of another method for determining multiple sets of sample input graph structure data according to an exemplary embodiment of the present disclosure.
Fig. 15 is a schematic flow diagram of yet another method for determining multiple sets of sample input graph structure data according to an exemplary embodiment of the present disclosure.
Fig. 16 is a schematic flow diagram of still another method for determining multiple sets of sample input graph structure data according to an exemplary embodiment of the present disclosure.
Fig. 17 is a system block diagram of a neural network model according to an exemplary embodiment of the present disclosure.
Fig. 18 is a schematic flow diagram of another graph neural network model training method according to an exemplary embodiment of the present disclosure.
Fig. 19 is a schematic flow diagram of yet another method for training the graph neural network model according to an exemplary embodiment of the present disclosure.
Fig. 20 is a schematic composition structure diagram of an apparatus for predicting an association relationship between signs and a lane according to an exemplary embodiment of the present disclosure.
Fig. 21 is a schematic composition structure diagram of another apparatus for predicting an association relationship between signs and a lane according to an exemplary embodiment of the present disclosure.
Fig. 22 is a schematic composition structure diagram of yet another apparatus for predicting an association relationship between signs and a lane according to an exemplary embodiment of the present disclosure.
Fig. 23 is a schematic composition structure diagram of still another apparatus for predicting an association relationship between signs and a lane according to an exemplary embodiment of the present disclosure.
Fig. 24 is a schematic composition structure diagram of still yet another apparatus for predicting an association relationship between signs and a lane according to an exemplary embodiment of the present disclosure.

Fig. 25 is a schematic composition structure diagram of another apparatus for predicting an association relationship between signs and a lane according to an exemplary embodiment of the present disclosure.

Fig. 26 is a schematic composition structure diagram of a graph neural network model training apparatus according to an exemplary embodiment of the present disclosure.

Fig. 27 is a structure diagram of an electronic device according to an exemplary embodiment of the present disclosure.

## DESCRIPTION OF THE EMBODIMENTS

In order to explain the present disclosure, example embodiments of the present disclosure will be described in detail below with reference to the accompanying drawings. It is apparent that the described embodiments are only a part of the embodiments of the present disclosure, not all of them. It should be understood that the present disclosure is not limited to the exemplary embodiments.

It should be noted that the relative arrangement of parts and steps, numerical expressions and numerical values set forth in these examples do not limit the scope of the disclosure unless specifically stated otherwise. In the present disclosure, the singular forms are intended to include the plural forms as well, unless the context clearly indicates otherwise.

Application overview

In the disclosed embodiment, the vehicle in the assisted driving or automatic driving state can select the correct traffic light by determining the association relationship between the traffic light and the lane, and then perform the corresponding response operation according to the signal from the traffic light.

In the related art, the association relationship between the traffic light and the lane can be determined in real time at a vehicle end, or the association relationship between the traffic light and the lane can be determined off-line at a cloud end, and the association relationship can be issued to the vehicle end. Generally, the association relationship between the traffic light and the lane may be determined by manually designing threshold parameters and algorithm flow. However, this method requires a lot of manual editing and checking work, which is not only labor-intensive but also inefficient.

In order to solve the problem of low efficiency in determining the association relationship between traffic lights and a lane, the embodiments of the present disclosure provide a method for predicting the association relationship between signs and a lane, which predicts the association relationship between preset type of traffic signs of the traffic signs and the lane by the graph neural network model. Since the graph neural network model is a pre-trained model, there is no need to manually design threshold parameters and algorithm flow when determining the association relationship. Therefore, it can improve the efficiency and accuracy of determining the association relationship between traffic lights and a lane, thereby ensuring safe driving.

Exemplary system

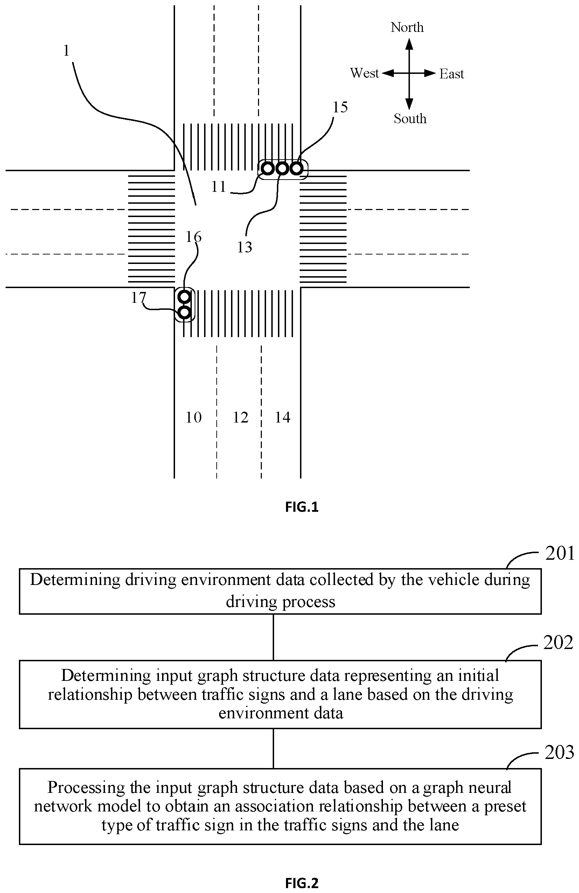

Fig. 1 is a schematic scene diagram of a vehicle driving at a traffic intersection according to an exemplary embodiment of the present disclosure. As shown in Fig. 1, since the traffic intersection 1 is an intersection and vehicles may enter the intersection from four directions, the driving scene at the traffic intersection 1 may include a scene in which vehicles enter the intersection from south to north, a scene in which vehicles enter the intersection from east to west, a scene in which vehicles enter the intersection from north to south, and a scene in which vehicles enter the intersection from west to east.

In the disclosed embodiment, the scene in which the vehicle enters a traffic intersection from south to north will be described as an example. As shown in Fig. 1, the traffic signs include a traffic light 11, a traffic light 13 and a traffic light 15. In a scene where a vehicle enters a traffic intersection from south to north, the traffic sign corresponding to the left lane is the traffic light 11, the traffic sign corresponding to the straight lane is the traffic light 13, and the traffic sign corresponding to the right lane is the traffic light 15. As shown in Fig. 1, the traffic sign further includes traffic lights 16 and 17 for indicating whether a pedestrian can pass through a road perpendicular to the lane 10.

Exemplarily, taking the case below as an example where the vehicle is driving in the lane 10 and is about to enter the traffic intersection 1, the lane 10 is a left-turn lane, the lane 12 is a straight lane, and the lane 14 is a right-turn lane. Since the lane 10 is a left-turn lane, a vehicle driving in the lane 10 need focus on only the signals from the traffic lights 11, without focusing on the signals from the traffic lights 13 and 15. Therefore, the association relationship between the lane 10 and the traffic light 11 is associated, and the association relationship between the lane 10 and the traffic light 13 and the traffic light 15 is not associated.

Exemplarily, taking the case below as an example where a vehicle is driving on the lane 10 and is about to enter the traffic intersection 1, the lane 10 is a left-turn plus straight lane, the lane 12 is a straight lane, and the lane 14 is a right-turn lane. Since the lane 10 is a left-turn plus straight lane, vehicles driving in the lane 10 need to focus on the signals from the traffic lights 11 and 13, without focusing on the signals from the traffic light 15. Therefore, the association relationship between the lane 10 and the traffic lights 11 and 13 is associated, and the association relationship between the lane 10 and the traffic light 15 is not associated.

Exemplarily, taking the association between the lane 10 and the traffic lights 11 and 13 as an example, when the vehicle is driving on the lane 10 and is about to enter the traffic intersection 1, a signal emitted by the traffic lights 11 or 13 may be acquired. A corresponding response operation is performed according to the signal emitted by the traffic light 11 or the signal emitted by the traffic light 13.

In some examples, response operations performed by a vehicle based on a signal emitted by a traffic light associated with a lane in which the vehicle is located include, but are not limited to, turning left, turning right, going straight, and brake waiting.

In some embodiments, if there is no association between the lane 10 and the traffic light 15, it may indicate that the vehicle is driving in the lane 10 and is about to enter the traffic intersection 1 without acquiring the signal from the traffic light 15.

Exemplary methods

Fig. 2 is a schematic flow diagram of a method for predicting an association relationship between a traffic sign and a lane according to an exemplary embodiment of the present disclosure. The method for predicting an association relationship between a traffic sign and a lane according to an embodiment of the present disclosure may be applied in a traffic intersection scene as shown in Fig. 1, which includes steps 201 to 203 as shown in Fig. 2.

Step 201, determining driving environment data collected by a vehicle during driving process.

Exemplarily, the driving environment data may be data including at least one static object and/or dynamic object in the vehicle driving environment. For example, the static object in the vehicle driving environment may include at least one of a green belt, a lane line, a preset type of traffic sign, a roadblock, and a ground arrow. The dynamic objects in the vehicle driving environment may include at least one of other vehicles, pedestrians, cyclists, and the like.

Exemplarily, the driving environment data may be collected by different types of sensors provided on the vehicle. The different types of sensors may include, but are not limited to, image sensors, attitude sensors, and point cloud sensors. In some examples, the image sensor may include a camera. The attitude sensor may include an Inertial Measurement Unit (IMU). The point cloud sensor may include an infrared sensor, an ultrasonic sensor, a millimeter-wave radar sensor, and a laser radar sensor.

In some examples, when a vehicle is about to enter or exit a traffic intersection and the distance between the vehicle and the traffic intersection is within a preset distance range (e.g., within 50 meters (m) before or after entering the traffic intersection), the driving environment data may be collected by various types of sensors on the vehicle.

Step 202, determining input graph structure data representing an initial relationship between the traffic signs and the lane based on the driving environment data.

Exemplarily, the traffic signs include preset type of traffic signs and environment signs. The preset type of traffic signs include signs for indicating a road drivable state. For example, the preset type of traffic signs may be traffic lights. The environment signs include signs for indicating a road environment. The environment signs may include environmental static elements and environmental dynamic elements. The environmental static elements may include, but are not limited to, sidewalks and stop lines. The environmental dynamic elements may include, but are not limited to, pedestrians.

In some embodiments, the input graph structure data refers to data in the form of a graph structure of the graph neural network model to be input. The input graph structure data includes a plurality of nodes and a plurality of edges, and an edge between any two nodes is used to represent an association relationship between the two nodes.

Exemplarily, the input graph structure data is used for representing an initial relationship between traffic signs and a lane, and the nodes in the input graph structure data may include sign nodes for representing traffic signs and lane nodes for representing a lane.

In some examples, since the traffic signs include a preset type of traffic sign and an environment sign, the nodes in the input graph structure data may include a preset type of node for representing the preset type of traffic sign, an environment node for representing the environment sign, and a lane node for representing the lane. The edge information (e.g., the presence or absence of an edge) between any two nodes in the input graph structure data is used to indicate whether an association relationship between the two nodes is possible.

For example, if an edge exists between a preset type of node and a lane node in the input graph structure data, it indicates that there may be an association relationship between a preset type of traffic sign corresponding to the preset type of node and a lane corresponding to the lane node. If there is no edge between the preset type of node and the lane node in the input graph structure data, it indicates that there may be no association relationship between the preset type of traffic sign corresponding to the preset type of node and the lane corresponding to the lane node.

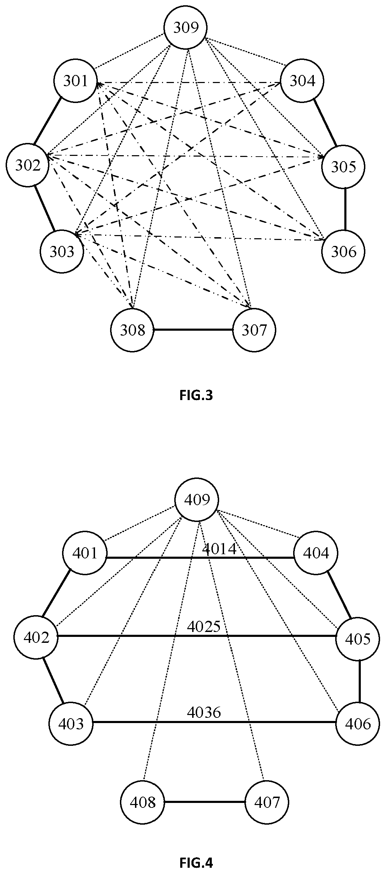

Fig. 3 is a schematic diagram of input graph structure data according to an exemplary embodiment of the present disclosure. Referring to Fig. 1, as shown in Fig. 3, the input graph structure data includes a lane node 301 representing a lane 10, a lane node 302 representing a lane 12, a lane node 303 representing a lane 14, a preset type of node 304 representing a traffic light 11, a preset type of node 305 representing a traffic light 13, a preset type of node 306 representing a traffic light 15, a preset type of node 307 representing a traffic light 16, a preset type of node 308 representing a traffic light 17, and an environment node 309 representing an environment sign.

For example, since the initial relationship between the lane 10 and the traffic lights 11, 13, 15, 16, and 17 is uncertain, the initial relationship between the lane 10 and the traffic lights may be set to have an association relationship. Therefore, as shown in Fig. 3, there are edges between the lane node 301 and the preset type of node 304 to the preset type of node 308.

As shown in Fig. 3, since the relationship between the lane nodes 301 and 302 and the lane nodes 302 and 303, the relationship between the presets type of nodes 304 and 305 and the preset types of nodes 305 and 306, and the relationship between the preset type of node 307 to the preset type of node 308 do not need to be predicted. Thus, each group of nodes that do not need to be predicted is connected with a solid line, and the nodes that need to predict the association relationship are connected with a dashed line or a dotted line.

Step 203, processing the input graph structure data based on a graph neural network model to obtain an association relationship between a preset type of traffic sign among the traffic signs and the lane.

In the embodiments, the preset type of traffic sign may include a plurality of preset type of traffic signs, and the lane may include a plurality of lanes. A lane may be taken as an example to describe clearly the spirits of the present disclosure.

The graph neural network model is used to process the input graph structure data to predict whether an edge exists between a preset type of node of the sign nodes and a lane node, and then determine whether an association relationship exists between the predicted pre-type sign and the lane.

In some examples, the processing of the input graph structure data by the graph neural network model may include performing information aggregation on nodes in the input graph structure data and predicting an association relationship between the preset type of traffic sign and the lane after the aggregation.

In some embodiments, the graph neural network model processes the input graph structure data to obtain output graph structure data. The output graph structure data is used to represent the association relationship between the preset type of traffic sign and the lane. In some examples, the association relationship between the preset type of traffic sign and the lane may be determined based on edge information between the preset type of node and the lane node in the output graph structure data. The association relationships between preset type of traffic signs and a lane include association and non-association.

Fig. 4 is a schematic diagram of output graph structure data according to an exemplary embodiment of the present disclosure. As shown in Fig. 4, it takes the lane node 401 as an aggregated node of lane node 301, and the preset type of node 404 as an aggregated node of preset type of node 304 as examples. Since there is an edge 4014 between the lane node 401 representing the lane 10 and the preset type of node 404 representing the traffic light 11 in the output graph structure data shown in Fig. 4, it can be determined that the lane 10 is associated with the traffic light 11. Since no edge exists between the lane node 401 representing the lane 10 and the preset type of nodes representing the other traffic lights in the output graph structure data shown in Fig. 4, it can be determined that there is no association between the lane 10 and the other traffic lights (e.g., the traffic lights 13, 15 to 17).

In some examples, the graph neural network model may be trained at a cloud end, and the trained graph neural network model may be downloaded to a vehicle end, and then an association relationship between a preset type of traffic sign and a lane may be predicted at the vehicle end in real time. In other examples, after the graph neural network model is trained at the cloud end, the trained graph neural network model can also be stored in the cloud end, and then the vehicle end uploads the real-time collected driving environment data to the cloud end. After the data is processed by the graph neural network model of the cloud end, the predicted association relationship is issued to the vehicle end in real time. The present disclosure does not specifically define the implementation of determining the association relationship between a preset type of traffic sign and a lane.

In the disclosed embodiment, the input graph structure data used for representing the initial relationship between the traffic signs and the lane is determined according to the driving environment data collected by the vehicle during driving process, and then the input graph structure data is processed by the graph neural network model to obtain the association relationship between the preset type of traffic sign and the lane. Since the graph neural network model is a pre-trained model, in the process of processing the input graph structure data by the graph neural network model, there is no need to manually design the threshold parameters and algorithm flow. Thus, it can improve the efficiency and accuracy of determining the association relationship between the preset type of traffic signs and the lane, thereby ensuring safe driving.

Since the lane nodes, the preset type of nodes and the environment nodes included in the input graph structure data are different types of nodes, the dimensions of the data corresponding to these nodes may be different, resulting in the above-mentioned nodes being respectively in different vector spaces. However, different vector spaces may correspond to different calculation processing modes. Thus, it is impossible to directly perform calculation processing on the lane node, the preset type of node and the environment node.

In order to ensure that the graph neural network model may normally predict the association relationship between the traffic lights and the lane, the different types of nodes described above may be aggregated by the graph neural network model in the disclosed embodiment so that the aggregated nodes are in the same vector space. Then, the nodes in the same vector space are operated to predict the association relationship between the preset type of traffic signs and the lane.

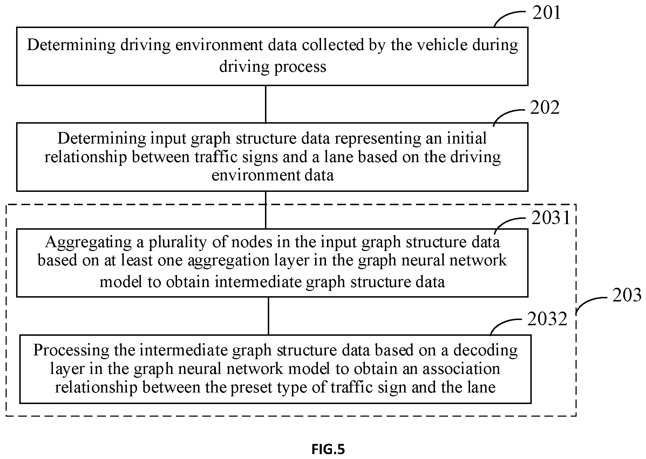

In some embodiments, as shown in FIG. 5, based on the embodiment shown in FIG. 2 described above, the step 203 may include the following steps 2031 and 2032.

Step 2031, aggregating a plurality of nodes in the input graph structure data based on at least one aggregation layer in the graph neural network model to obtain intermediate graph structure data.

Exemplarily, the aggregation layer is used to perform feature aggregation on preset type of nodes, environment nodes and lane nodes in different vector spaces in the input graph structure data to transform the preset type of nodes, environment nodes and lane nodes into nodes of the same vector space.

Exemplarily, the graph neural network model may include one or more aggregation layers. If the graph neural network model includes a plurality of aggregation layers, the plurality of aggregation layers may be connected in sequence. For example, the output of a first aggregation layer is connected to the input of a second aggregation layer, the output of the second aggregation layer is connected to the input of a third aggregation layer, and so on, up to the last aggregation layer. The embodiments of the present disclosure do not limit the number of aggregation layers included in the graph neural network model, which is related to the prediction accuracy of the graph neural network. In some examples, the number of aggregation layers included in the graph neural network model may be a minimum number of layers to ensure prediction accuracy of the graph neural network.

In some embodiments, the aggregation layer may aggregate multiple nodes by aggregating edge information for neighboring nodes and connections. Herein, the neighbour nodes may include nodes connected to the node to be updated via one edge (neighbour nodes with a depth of 1), and may further include nodes connected to the node to be updated via a plurality of edges (neighbour nodes with a depth of greater than or equal to 1). The edge connected to a node may include an edge directly connected to the node to be updated (an edge having a depth of 1), or may further include an edge indirectly connected to the node to be updated (an edge having a depth of 1 or more).

In some embodiments, the intermediate graph structure data may be aggregated data for each node in the input graph structure data, the intermediate graph structure data including each updated node.

Step 2032, processing the intermediate graph structure data based on a decoding layer in the graph neural network model to obtain an association relationship between the preset type of traffic sign and the lane.

Exemplarily, the decoding layer is used to perform arithmetic processing on the nodes in the intermediate graph structure data to obtain the edge information between the preset type of node and the lane node.

In some embodiments, the decoding layer may be a fully connected neural network layer. By performing operation processing on a preset type of node and a lane node in the same vector space through a fully connected neural network layer, an association relationship between a predicted preset type of traffic sign and a lane can be obtained.

In an embodiment of the present disclosure, a plurality of nodes in input graph structure data are aggregated by at least one aggregation layer in a graph neural network, which not only enables dimension reduction of the data, but also transforms the plurality of nodes into the same vector space. Therefore, the association relationship between the preset type of traffic signs and the lane may be avoided because multiple nodes are not in the same vector space so as to ensure the prediction accuracy of the graph neural network model.

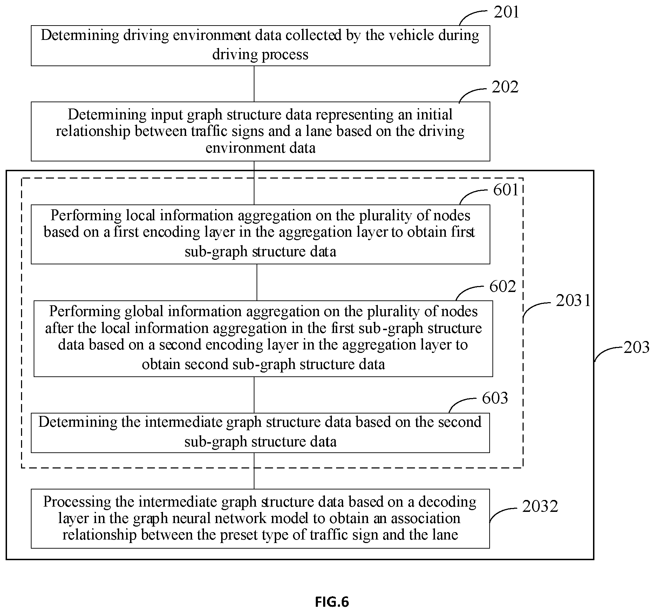

As shown in Fig. 6, based on the embodiment shown in Fig. 5 described above, the step 2031 may include the following steps 601 to 603.

Step 601, performing local information aggregation on the plurality of nodes based on a first encoding layer of the aggregation layer to obtain first sub-graph structure data.

Exemplarily, the first coding layer may be a single layer graph neural network for local information aggregation in a graph neural network, which may be referred to as a graph neural network (GNN) block. The local information aggregation may be aggregation of information of partial nodes and partial edges in the input graph structure data. For example, information of neighboring nodes of depth 1 and edges of depth 1 may be aggregated.

In some embodiments, the first encoding layer may perform local information aggregation on the plurality of nodes by a Graph SAmple and aggreGatE (GraphSage) spatial domain model, a learnable graph convolution network (LGCN) spatial domain model and a mixture model networks (MoNet) spatial domain model, etc.

Step 602, performing global information aggregation on the plurality of nodes after local information aggregation in the first sub-graph structure data based on a second encoding layer of the aggregation layer to obtain second sub-graph structure data.

Exemplarily, the second coding layer is a single layer graph neural network for global information aggregation in a graph neural network, which may be referred to as a Transformer block. The global information aggregation may be aggregation of information of all nodes and information of all edges in the graph structure data.

The second encoding layer may perform global information aggregation on a plurality of nodes in the first subgraph structure data by a Transformer architecture having a multi-headed attention mechanism.

Step 603, determining the intermediate graph structure data based on the second sub-graph structure data.

Exemplarily, when the graph neural network model includes an aggregation layer (i.e., the graph neural network model includes a first coding layer and a second coding layer), intermediate graph structure data can be obtained by the above-described steps 601 and 602.

In some examples, when the graph neural network model includes an aggregation layer, the step 603 may be considered to determine the second subgraph structure data output by the aggregation layer as intermediate graph structure data.

Exemplarily, when the graph neural network model includes a plurality of aggregation layers (namely, each aggregation layer of the plurality of aggregation layers includes a first encoding layer and a second encoding layer), second sub-graph structure data output by one aggregation layer can be obtained by the above-mentioned steps 601 and 602, and the second sub-graph structure data is input to the next aggregation layer, and so on until the last aggregation layer outputs the intermediate graph structure data.

In some examples, when the graph neural network model includes a plurality of aggregation layers, the step 603 may be considered as processing the sub-graph structure data output by the previous aggregation layer successively via other aggregation layers in the graph neural network model (such as aggregation layers other than the first aggregation layer in the graph neural network model) until the last aggregation layer outputs the sub-graph structure data, and determining the sub-graph structure data output by the last aggregation layer as the intermediate graph structure data. The manner in which any aggregation layer in the graph neural network model processes the input data is similar to the steps 601 and 602 described above.

In the embodiment of the present disclosure, when a plurality of nodes in the input graph neural network are aggregated by the aggregation layer of the graph neural network, a two-stage aggregation mode of local information aggregation and then global information aggregation is used, which is beneficial to improve the accuracy of the graph neural network model for predicting the association relationship.

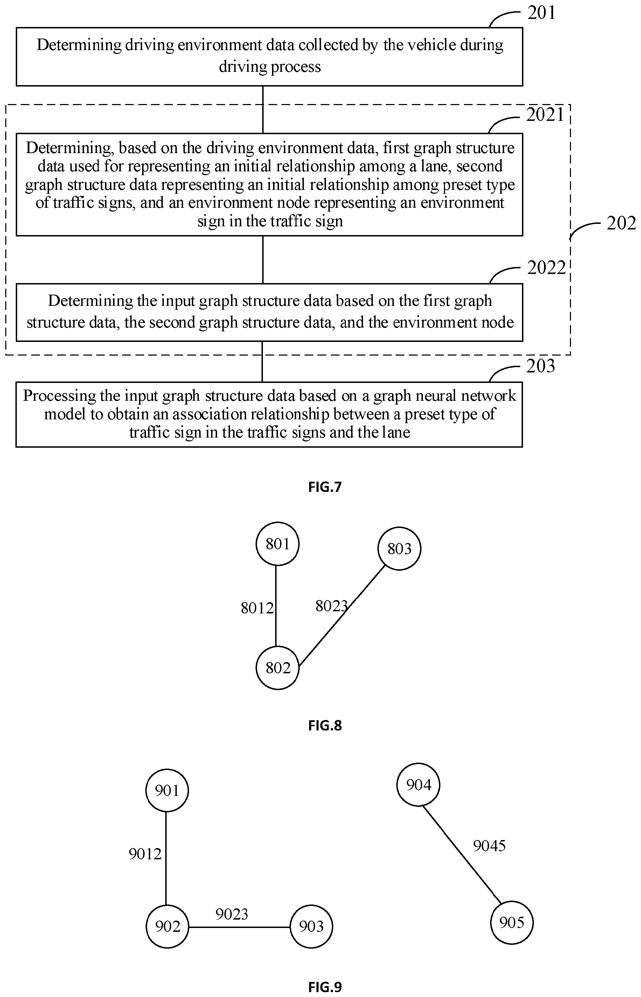

As shown in Fig. 7, based on the embodiment shown in Fig. 2 described above, the step 202 may include the following steps 2021 and 2022.

Step 2021, determining, based on the driving environment data, first graph structure data representing an initial relationship between lanes, second graph structure data representing an initial relationship between preset type of traffic signs, and an environment node representing an environment sign among the traffic signs.

Exemplarily, the initial relationship between the lanes is used to represent the intrinsic relationship between the lanes in the driving environment of the vehicle. For example, in the first graph structure data, there is an edge between two lane nodes corresponding to two adjacent lanes, and there is no edge between two lane nodes that are not adjacent. The initial relationship between the preset type of traffic signs is used to indicate whether each of the preset type of traffic signs belongs to the same group in the driving environment of the vehicle (e.g., whether they are provided on the same traffic light bracket). For example, in the second graph structure data, edges exist between preset type of nodes corresponding to preset type of traffic signs belonging to the same group, and edges do not exist between preset type of nodes corresponding to preset type of traffic signs not belonging to the same group

Fig. 8 is a schematic diagram of first graph structure data according to an exemplary embodiment of the present disclosure. Referring to Fig. 1, as shown in Fig. 8, the first graph structure data includes a lane node 801 representing the lane 10, a lane node 802 representing the lane 12, and a lane node 803 representing the lane 14. Since the lane 12 is provided between the lane 10 and the lane 14 and is adjacent to both lanes 10 and 14, there are an edge 8012 between the lane node 802 and the lane node 801 and an edge 8023 between the lane node 802 and the lane node 803.

Fig. 9 is a schematic diagram of second graph structure data according to an exemplary embodiment of the present disclosure. Still reference to Fig. 1, as shown in Fig. 9, since the traffic light 11, the traffic light 13 and the traffic light 15 belong to the traffic light provided on the same traffic light bracket, namely, belong to the same group. Accordingly, an edge 9012 exists between the preset type of node 901 representing the traffic light 11 and the preset type of node 902 representing the traffic light 13, and an edge 9023 exists between the preset type of node 902 representing the traffic light 13 and the preset type of node 903 representing the traffic light 15. As another example, the traffic light 16 and the traffic light 17 are located on another traffic light bracket. Thus, there is an edge 9045 between the node 904 representing the preset type of traffic light 16 and the node 905 representing the traffic light 17.

Step 2022, determining the input graph structure data based on the first graph structure data, the second graph structure data, and the environment node.

Exemplarily, the initial graph structure data may be determined from each of the lane nodes and the edges between each of the lane nodes in the first graph structure data, each of the preset types of nodes and the edges between each of the preset types of nodes in the second graph structure data, and the environment nodes. Then, a possible association relationship is predicted between different types of nodes in the initial graph structure data, and an initial edge is set or not set between different types of nodes according to the prediction result so as to obtain input graph structure data.

In some examples, an association relationship that may exist between nodes of different types in the same graph structure data may be predicted based on driving environment of the vehicle. For example, an association relationship that may exist between any lane node and any preset type of node is predicted based on a possible association relationship between a lane and a preset type of traffic sign in the driving environment of the vehicle. As another example, a possible association relationship between an environment node and any lane node and/or any preset type of node is predicted based on a possible association relationship between an environment sign and a lane and/or preset type of traffic sign in a driving environment of the vehicle.

In some examples, an initial edge is set between nodes of different types if the prediction result includes that an association relationship may exist between nodes of different types. For example, if the predicted result includes a possible association relationship between any lane node and any preset type of node, an initial edge is set between the lane node and the preset type of node. As another example, if the predicted result includes a possible association relationship between the environment node and any of the lane nodes and/or any of the preset type of nodes, then an initial edge is set between the environment node and any of the lane nodes and/or any of the preset type of nodes.

In some examples, no initial edge is set between different types of nodes if the prediction result includes that no association relationship is possible between the different types of nodes.

Exemplarily, as shown in Fig. 8 and Fig. 9 in conjunction with Fig. 3, a lane node 801, a lane node 802 and a lane node 803, an edge 8012 and an edge 8023 in Fig. 8, a preset type of node 901, a preset type of node 902, a preset type of node 903, a preset type of node 904, a preset type of node 905, an edge 9012, an edge 9023, an edge 9045 and an environment node 309 in Fig. 9 are set in the same graph structure data. According to a possible association relationship between the environment node 309 and any other type of node (such as lane nodes 801 to 803, preset type of nodes 901 to 905) in the same graph structure data, and an possible association relationship between the lane nodes 801 to 803 and any other preset type of nodes, such as preset type of nodes 901 to 905, in the same graph structure data, initial edges may be set between the environment node 309 and any other type of node in the same graph structure data and between the lane node 801, the lane node 802, and the lane node 803 and any other preset type of node in the same graph structure data to obtain input graph structure data as shown in Fig. 3.

In the embodiment of the present disclosure, since the first graph structure data, the second graph structure data and the environment node are all determined according to the driving environment data of the vehicle, the first graph structure data, the second graph structure data and the environment node may all accurately reflect the current driving environment of the vehicle. Furthermore, the input graph structure data determined according to the first graph structure data, the second graph structure data and the environment node may also accurately reflect the current driving environment of the vehicle, which is beneficial to accurately predict the association relationship between the preset type of traffic sign and the lane according to the input graph structure data subsequently and improve the driving safety.

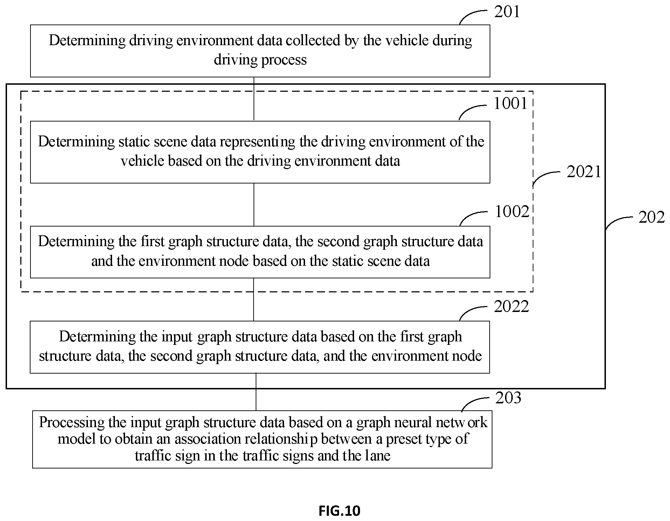

As shown in Fig. 10, based on the embodiment shown in Fig. 7 described above, the step 2021 may include the following steps 1001 and 1002.

Step 1001, determining static scene data representing driving environment of the vehicle based on the driving environment data.

For convenience in describing a specific implementation of determining static scene data, in the embodiments of the present disclosure, the vehicle is referred to as an autonomous vehicle, and the lane in which the autonomous vehicle travels is referred to as an autonomous lane.

Exemplarily, the static scene data includes data obtained by encoding, reconstructing, and logically inferring object data a plurality of static objects acquired from an autonomous vehicle at a plurality of moments. In some examples, the plurality of static objects may include a plurality of different types of static objects. For example, the plurality of static objects may include preset type of traffic signs, ground arrows, and lane lines.

Exemplarily, the driving environment data may include object data of a static object included in the autonomous vehicle driving environment at each of a plurality of moments, and the static scene data may be determined based on the object data of the static object included in the autonomous vehicle driving environment at each moment.

In some examples, the determining the static scene data according to the data of the static object included in the autonomous vehicle driving environment at each moment may include the following steps S1 to S5.

Step S1, acquiring the object data of a static object included in the driving environment of the autonomous vehicle at each moment.

Exemplarily, the object data of the static object at each moment may be acquired by image frames at each moment in the driving environment data. In some examples, a static object included in a driving environment of an autonomous vehicle at each moment may be separately identified from image frames at each moment so as to obtain object data of the static object.

In some embodiments, each static object at each moment may be identified separately from each image frame by a static object identification model. In some examples, if the static object includes a preset type of traffic sign, an environmental static element, a lane line, and a ground arrow, the static object identification model includes, but is not limited to, a preset type of traffic sign identification model, an environmental static element identification model, a lane line identification model, and a ground arrow identification model.

Step S2, encoding the object data of the static object at each moment to obtain the encoded data of the static object at each moment.

Exemplarily, the encoding process in S2 may include converting the object data for each static object into encoded data for each static object represented by a plurality of explicit vectors, respectively. In some examples, an explicit vector refers to a vector which has a physical meaning and the number in which may embody the magnitude of a physical quantity represented. A plurality of explicit vectors representing encoded data of the same type may constitute an explicit set of vectors, e.g., encoded data of predetermined type of signs at a plurality of moments may constitute an explicit set of vectors.

In some embodiments, the object data of the static object at each moment may be encoded by an encoding algorithm, resulting in encoded data of the static object at each moment respectively represented by the set of display vectors. The encoding algorithms include, but are not limited to, common neural network models and classical rule algorithms.

Step S3, reconstructing the encoded data of the static object at each moment.

The encoded data of the static object at each moment are respectively aggregated and reconstructed by the aggregation reconstruction algorithm, so as to obtain the reconstructed data of the static object corresponding to the driving environment of the autonomous vehicle. The aggregation reconstruction algorithms include, but are not limited to, common neural networks and other classical rule algorithms.

Step S4, performing the logical reasoning on the reconstructed data of the static objects obtained after the reconstruction to obtain logical layer data and a logical relationship between the reconstructed data of each static object and the logical layer data.

Exemplarily, the reconstruction data of the static object may include reconstruction data of a lane line, reconstruction data of a preset type of traffic sign, reconstruction data of an environmental static element, and reconstruction data of a ground arrow. Step S4 may include performing logical reasoning on the reconstructed data of the lane line by a logical reasoning algorithm to obtain lane data. The intersection area information is obtained by the logical reasoning of lane data and reconstruction data of preset types of signs by the logical reasoning algorithms.

In some examples, the reconstructed data of the static object obtained by the logical reasoning may be referred to as static object data for ease of presentation. For example, the reconstruction data of the preset type of traffic sign, the reconstruction data of the environmental static element, and the reconstruction data of the ground arrow may be referred to as the preset type of traffic sign data, the environmental static element data, and the ground arrow data, respectively.

Step S5, constituting the static scene data according to the logic layer data and the logical relationship between the reconstruction data of each static object and the logic layer data.

Exemplarily, the static scene data may include, but is not limited to, ground arrow data, lane data, adjacency relationships between lanes, preset types of traffic sign data, groups of preset type of traffic signs, and environmental static element data.

Step 1002, determining the first graph structure data, the second graph structure data and the environment node based on the static scene data.

In some embodiments, according to the step 1002, the first graph structure data is determined based on the ground arrow data, the lane data and connection relationships between lanes in the static scene data. The second graph structure data is determined based on the preset type of traffic sign data and a group of preset type of traffic signs in the static scene data. The environment nodes are determined based on the environment static element data in the static scene data.

In an embodiment of the present application, the lane node in the first graph structure data, the preset type of node in the second graph structure data and the environment node are all data represented by the implicit vector. Here, the implicit vector is a vector as opposed to an explicit vector. The implicit vector has no physical meaning, and the magnitude of the physical quantity represented by the number in the vector cannot be determined by the number.

In some examples, the process of converting data represented by an explicit vector into data represented by an implicit vector may be referred to as embedding. The implicit vector can be obtained by deep feature extraction of the implicit vector obtained after explicit vector embedding. Exemplarily, both embedding and deep feature extraction may be implemented by the feature extraction module. For example, the lane node can be obtained by embedding and feature extracting the lane data by a feature extraction module.

Exemplarily, an environment node can be obtained by embedding and feature extracting environment static element data in static scene data by a feature extraction module. In some examples, the feature extraction module may include but not be limited to multi-layer perceptrons, Long Short-Term Memory (LSTM) and Gated Recurrent Unit (GRU).

In the disclosed embodiment, since the environment node is determined according to the environmental static element data in the static scene data, and the environmental static element data is determined based on the collected driving environment data, the environment node can accurately embody the environment sign included in the driving environment of the actual vehicle.

In some embodiments, the determining an implementation of the first graph structure data may include: determining second arrow data based on the first arrow data in the static scene data; and determining first graph structure data based on the lane data in the static scene data, the adjacency relationship between lanes in the static scene data, and the second arrow data.

Exemplarily, the first arrow data may include ground arrow data corresponding to the ground arrow included in the driving environment of the vehicle (the ground arrow data may be represented by the corresponding explicit vector). The second arrow data may be the arrow data obtained after washing the first arrow data and filtering out the arrow data not related to the preset type of traffic sign.

In some embodiments, a plurality of lane nodes for representing lanes may be determined based on the lane data and the second arrow data. The first graph structure data is determined based on the adjacency relationship and each lane node.

Since a plurality of lanes are included in a driving environment of an autonomous vehicle, and a plurality of lane data (corresponding to a plurality of explicit vectors) are correspondingly included in the static scene data, a corresponding plurality of lane nodes are included in the first graph structure data. For example, referring to Fig. 1 and Fig. 8, three lanes including a lane 10, a lane 12, and a lane 14 are included in a scene in which an autonomous vehicle is about to enter a traffic intersection 1 from south to north, and three lane nodes including a lane node 801, a lane node 802, and a lane node 803 are correspondingly included in the first graph structure data.

Again, due to factors affecting the association relationship of each lane with preset type of s of signs, arrows on each lane are included. Therefore, the corresponding arrow information needs to be embedded in the lane nodes corresponding to each lane.

Exemplarily, a plurality of lane data may be first embedded and feature extracted to obtain a corresponding plurality of lane nodes. Then the second arrow data represented by the plurality of explicit vectors is embedded and feature extracted respectively to obtain the plurality of arrow information represented by the plurality of implicit vectors. Each arrow information represented by each implicit vector is then embedded into a lane node representing each corresponding lane.

In some examples, if a ground arrow is included in a lane, corresponding arrow information is embedded for a lane node representing the lane. If an arrow is not included in the lane, the lane node indicating the lane is not embedded with arrow information. For example, referring to Fig. 1 and Fig. 8, in a scene in which an autonomous vehicle enters a traffic intersection 1 from south to north, if a left-turn ground arrow is included in the lane 10, a straight ground arrow is included in the lane 12, and a right-turn ground arrow is included in the lane 14, the left-turn arrow information corresponding to the left-turn ground arrow is embedded in the lane node 801, straight arrow information corresponding to the straight ground arrow is embedded in the lane node 802, and right-turn arrow information corresponding to the right-turn ground arrow is embedded in the lane node 803. For another example, still reference to Figs. 1 and 8, in a scene in which a vehicle is about to enter the traffic intersection 1 from south to north, if only the lane 12 includes a straight ground arrow, and neither the lane 10 nor the lane 14 includes a ground turn arrow, only the straight arrow information corresponding to the straight ground arrow needs to be embedded in the lane node 802, while no arrow information is embedded in the lane node 801 and the lane node 803.

Exemplarily, it is similar to the implementation of embedding and feature extraction of environmental static element data. The second arrow data may also be embedded and feature extracted by the feature extraction module to obtain the arrow information represented by a plurality of implicit vectors.

In some embodiments, after determining the plurality of lane nodes, an edge may or may not be provided between two lane nodes corresponding to the two lanes according to an adjacency relationship between the two lanes. For example, if two lanes are adjacent, an edge is provided between two lane nodes corresponding to the two lanes. If two lanes are not adjacent, no edge is provided between two lane nodes corresponding to the two lanes. In particular, reference is made to Figs. 1, 3 and 8 described above and will not be repeated here.

In the disclosed embodiment, since the lane nodes are determined based on the lane data and the second arrow data, and the lane nodes are superimposed with the lane information and the arrow information, the lane information represented by the lane nodes can accurately reflect the lanes in the driving environment. Furthermore, the first graph structure data determined based on the lane nodes and the adjacent relationships may also accurately reflect the respective lanes and the adjacent relationships between the respective lanes in the vehicle driving environment.

In the embodiment of the present disclosure, by washing the first arrow data to obtain the second arrow data, irrelevant arrow data may be filtered out, the workload of subsequent embedding and feature extraction may be reduced, and at the same time, the dimension of lane nodes may be reduced, which is beneficial to simplifying the first graph structure data.

In some embodiments, the determining an implementation of the second graph structure data may include: determining a plurality of preset types of nodes for representing the preset types of traffic signs based on the preset types of traffic sign data in the static scene data and determining the second graph structure data based on each preset type of node and each preset type of traffic sign group in the static scene data.

Exemplarily, a plurality of preset types of traffic signs are included in a driving environment of an autonomous vehicle, and a plurality of preset types of traffic sign data are correspondingly included in the static scene data. Therefore, a plurality of corresponding preset type of nodes are included in the second graph structure data. With reference to Figs. 1 and 9, in a scene where an autonomous vehicle is about to enter a traffic intersection 1 from south to north, five traffic lights 11, 13, 15, 16 and 17 are included, and the second graph structure data correspondingly includes five lane nodes from a preset type of node 901 to a preset type of node 905.

In some examples, the determining a plurality of preset type of nodes is realized by embedding and feature extracting data of a plurality of preset types of traffic signs represented by an explicit vector via a feature extraction module to obtain a plurality of preset types of nodes represented by a plurality of implicit vectors. The feature extraction module may be the same as described above and will not be described in detail herein.

In some embodiments, after determining a plurality of preset types of nodes, an edge may be set between preset type of nodes corresponding to the preset type of traffic signs in the same group and an edge may not be set between preset type of nodes corresponding to preset type of traffic signs in a different group according to the group of each preset type of traffic sign. In particular, reference is made to Figs. 1, 3 and 9 described above and will not be repeated here.

In the disclosed embodiment, since the plurality of preset type of nodes are determined based on the preset type of traffic sign data, which is determined according to the driving environment data, the preset type of nodes can accurately embody the preset type of traffic signs in the driving environment. Furthermore, according to the second graph structure data determined by each preset type of node and the group of each preset type of traffic sign in the static scene data, each preset type of traffic sign and the positional relationship between each preset type of traffic sign in the driving environment can also be accurately reflected.

In the disclosed embodiment, the static scene data is determined from the driving environment data. Therefore, the static scene data can accurately reflect the static objects and the positional relationship of the static objects in the driving environment. Furthermore, the first graph structure data, the second graph structure data, and the environment nodes determined from the static scene data can also accurately reflect each static object and the positional relationship of each static object in the driving environment.

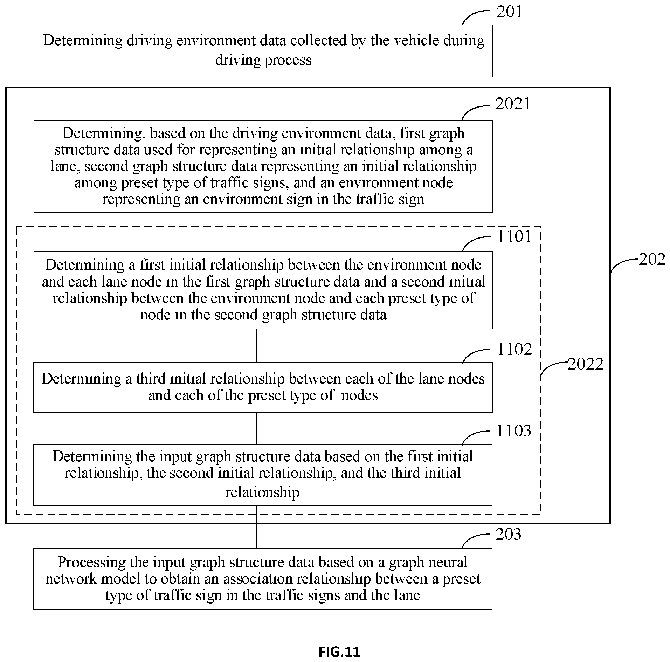

As shown in Fig. 11, based on the embodiment shown in Fig. 7 described above, the step 2022 may include the following steps 1101 to 1103.

Step 1101, determining a first initial relationship between the environment node and each lane node in the first graph structure data and a second initial relationship between the environment node and each preset type of node in the second graph structure data.

Exemplarily, the first initial relationship may correspond to a predicted association relationship between each lane and an environment sign in the driving environment. The second initial relationship may correspond to a predicted association relationship between each preset type of traffic sign and each environment sign in the driving environment.

In one example, in order to reduce the path length of information transmission when performing feature aggregation on a node subsequently, a corresponding edge can be set between an environment node as a transit virtual node and a node other than the environment node.

Referring to Fig. 3, a corresponding edge is set between a node 309 and other nodes (such as a node 301, a node 302, a node 303, a node 304, a node 305, a node 306, a node 307 and a node 308) in the input graph structure data except the node 309.

Step 1102, determining a third initial relationship between each lane node and each preset type of node.

Exemplarily, the third initial relationship may correspond to a predicted association relationship between each lane and each preset type of traffic sign. As in the description of Fig. 3, since the association relationship between each lane and each preset type of traffic sign is uncertain, a corresponding edge is provided between each lane node and each preset type of node.

Still reference to Fig. 3, the nodes 301, 302, and 303 each have a corresponding edge with each of the predetermined types of nodes (e.g., a node 304, a node 305, a node 306, a node 307, and a node 308).

Step 1103, determining the input graph structure data based on the first initial relationship, the second initial relationship, and the third initial relationship.

Exemplarily, the step 1103 may include forming each node and each intrinsic edge in the input graph structure data based on the first graph structure data, the second graph structure data, and the environment node, and correspondingly setting the predicted edge between each node based on the first initial relationship, the second initial relationship, and the third initial relationship to obtain the input graph structure data.

In some examples, each node in the input graph structure data includes each lane node in the first graph structure data, each preset type of node in the second graph structure data, and an environment node. Each intrinsic edge in the input map data includes an intrinsic edge between each lane node in the first graph structure data and an intrinsic edge between each preset type of node in the second graph structure data. The intrinsic edge between each lane node includes an edge between two lane nodes corresponding to each adjacent lane. For example, referring to Fig. 8, the intrinsic edges between lane nodes include an edge 8012 and an edge 8023. The intrinsic edge between each preset type of node includes an edge between a plurality of preset types of nodes corresponding to a plurality of preset types of traffic signs of the same group. For example, referring to Fig. 9, the intrinsic edges between each preset type of node include an edge 9012, an edge 9023, and an edge 9045.

In some examples, on the basis of each node and each intrinsic edge in the input graph structure data, a corresponding predicted edge may be set between the environment node and each lane node and each preset type of node based on the first initial relationship and the second initial relationship, and a corresponding predicted edge may be set between each node and each preset type of node based on the third initial relationship, so as to obtain the input graph structure data as shown in Fig. 3.

In the disclosed embodiment, due to the first initial relationship between the environment node and each lane node in the first graph structure data, the initial association relationship between the environment sign and each lane in the vehicle driving environment can be more accurately represented. The second initial relationship between the environment node and each preset type of node in the second graph structure data can more accurately represent an initial association relationship between the environment sign and each preset type of traffic sign in the vehicle driving environment. The third initial relationship between each lane node and each preset type of node can more accurately represent the initial association relationship between each lane and each preset type of traffic sign in the vehicle driving environment. Therefore, the input graph structure data determined based on the first initial relationship, the second initial relationship and the third initial relationship can more accurately represent the initial relationship between the logical sign and the lane, which is beneficial to accurately determine the association relationship between the preset type of traffic sign and the lane and improve the driving safety.

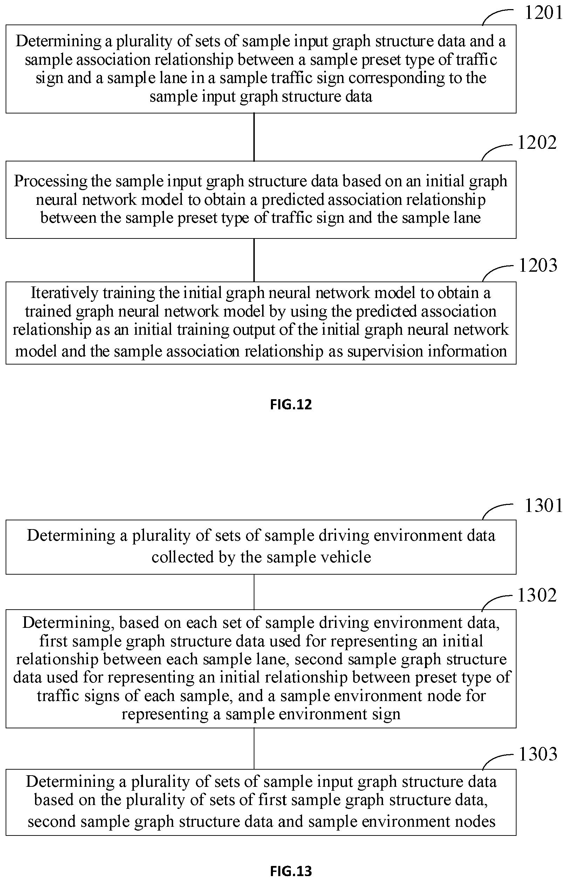

In order to improve the prediction accuracy of the graph neural network model, the above graph neural network model may be model-trained in advance to obtain the graph neural network model used in the foregoing embodiment. Embodiments of the present disclosure also provide a method for training the graph neural network model, as shown in Fig. 12, including following steps 1201 to 1203.

Step 1201, determining a plurality of sets of sample input graph structure data and a sample association relationship between a preset type of sample traffic sign among sample traffic signs corresponding to the sample input graph structure data and a sample lane.

Herein, the sample input graph structure data is used to represent an initial relationship between the sample traffic signs and the sample lane.

Exemplarily, the plurality of sets of sample input graph structure data may be a plurality of input graph structure data determined based on driving environment data collected for a preset time (e.g., 10 days) for a plurality of vehicles. In some examples, a plurality of sets of sample input graph structure data may be selected from driving environment data collected by a plurality of vehicles over a predetermined time, and determined from driving environment data collected by a plurality of vehicles over a predetermined distance into each traffic intersection (e.g., within 50 meters (m) before and after entering the traffic intersection).

In some embodiments, as shown in Fig. 13, a method for determining multiple sets of sample input graph structure data may include steps 1301 through 1303.

Step 1301, determining a plurality of sets of sample driving environment data collected by the sample vehicle.

Exemplarily, the sample vehicle may include at least one vehicle. In some examples, the sample vehicles are all vehicles in a region.

Exemplarily, the partial driving environment data collected for a preset time by at least one vehicle may be determined as a plurality of sets of sample driving data. In some examples, among the driving environment data collected by the at least one vehicle within a preset time, the driving environment data collected by the at least one vehicle within a preset distance range into each traffic intersection may be determined as a plurality of sets of sample driving environment data.

In some embodiments, the driving environment data collected by a vehicle when the vehicle enters a traffic intersection from a direction may be determined as a set of sample driving environment data.

Step 1302, based on each set of sample driving environment data, determining first sample graph structure data used for representing an initial relationship between each sample lane, second sample graph structure data used for representing an initial relationship between preset type of traffic signs of each sample, and a sample environment node for representing a sample environment sign.

Exemplarily, the manner in which the first sample graph structure data, the second sample graph structure data, and the sample environment nodes are determined is similar to the manner in which the first graph structure data, the second graph structure data, and the group environment nodes are determined and will not be described in detail herein.

Step 1303, determining a plurality of sets of sample input graph structure data based on the plurality of sets of first sample graph structure data, second sample graph structure data and sample environment nodes.

Exemplarily, a set of sample input graph structure data may be determined based on a set of first sample graph structure data, second sample graph structure data, and sample environment nodes. Determining a set of sample input graph structure data is similar to determining input graph structure data and will not be described in detail herein.

In the disclosed embodiment, the first sample graph structure data, the second sample graph structure data, and the sample environment nodes are determined by each set of sample driving environment data. Therefore, each set of the first sample graph structure data, the second sample graph structure data and the sample environment node can accurately reflect the sample driving environment of each sample vehicle. Furthermore, according to the plurality of groups of the first sample graph structure data, the second sample graph structure data and the plurality of groups of the sample input graph structure data determined by the sample environment node can also accurately reflect the sample driving environment of each sample vehicle, which is beneficial to the subsequent training of the graph neural network model according to the plurality of groups of the sample input graph structure data performance of the graph neural network model.

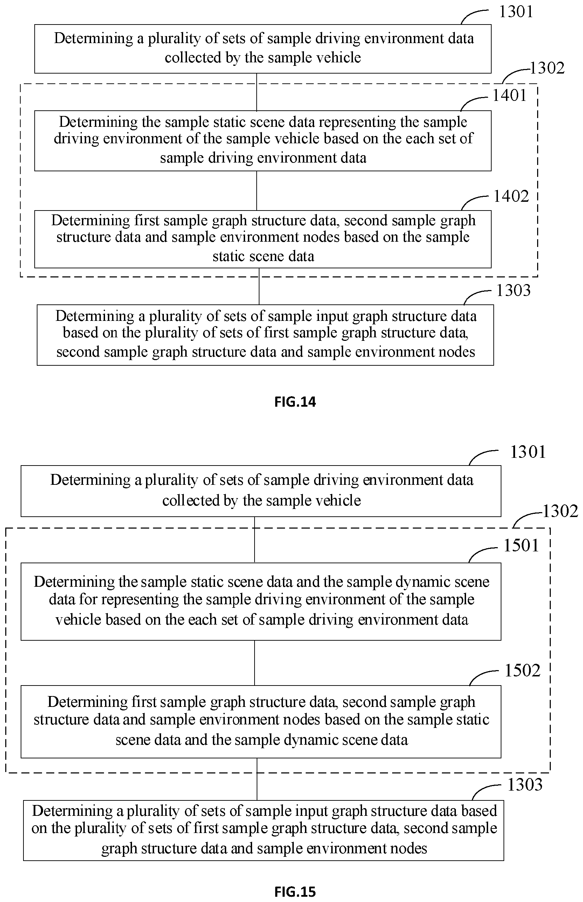

In some embodiments, the step 1302 may include steps 1401 and 1402, as shown in Fig. 14.

Step 1401, determining the sample static scene data representing the sample driving environment of the sample vehicle based on the each set of sample driving environment data.

Exemplarily, the sample static scene data, similar to static scene data, may be data obtained by encoding, reconstructing, and logically inferring object data for a plurality of sample static objects acquired at a plurality of moments by a sample vehicle.

Exemplarily, the manner in which the sample static scene data is determined is similar to the manner in which the static scene data is determined, and reference can be made to steps S1 to S5, which will not be described in detail herein.

Step 1402, based on the sample static scene data, determining first sample graph structure data, second sample graph structure data and sample environment nodes.

Exemplarily, the manners in which the first sample graph structure data, the second sample graph structure data, and the manner in which the sample environment nodes are determined are respectively similar to the manners in which the first graph structure data, the second graph structure data, and the environment nodes can be determined, see the step 1002, and will not be described in detail herein.

In the disclosed embodiment, the sample static scene data is determined by each set of sample driving environment data. Therefore, the sample static scene data can accurately reflect the position relationship of each sample static object and each sample static object in the sample driving environment. Furthermore, the first sample graph structure data, the second sample graph structure data and the sample environment node determined according to the sample static scene data can also accurately reflect the position relationship of each sample static object and each sample static object in the sample driving environment.

In some embodiments, the step 1302 may include steps 1501 and 1502, as shown in Fig. 15.

Step 1501, determining the sample static scene data and the sample dynamic scene data for representing the sample driving environment of the sample vehicle based on the each set of sample driving environment data.

Exemplarily, the sample dynamic scene data may be data obtained by encoding, reconstructing, and logically inferring object data for a plurality of sample dynamic objects acquired at a plurality of moments by a sample vehicle. The plurality of sample dynamic objects may include different types of sample dynamic objects. For example, the plurality of sample dynamic objects may include a sample vehicle and a sample pedestrian.

In some examples, each set of sample driving environment data may be processed to obtain sample static scene data and sample dynamic scene data. The data processing may include, but is not limited to, encoding, reconstruction, logical reasoning, and scene segmentation.

Exemplarily, the step 1501 may include steps S11 to S15.

Step S11, determining a sample vehicle corresponding to each set of sample driving environment data, and acquiring object data of a sample static object and object data of a sample dynamic object (including the sample vehicle itself) included in the driving environment of the sample vehicle at a plurality of moments.

Exemplarily, the object data of the sample static object included in the driving environment of the sample vehicle at the plurality of moments may be acquired through image frames of the plurality of moments acquired during the driving of the sample vehicle. The object data of the sample dynamic object included in the driving environment of the vehicle at a plurality of moments is acquired by point cloud data and/or vehicle attitude data at a plurality of moments collected during the driving of the vehicle.

In some examples, the object data of the sample static object is obtained from the image frame in a manner similar to a manner in which the object data of the static object is obtained and will not be described in detail herein.

In some examples, the object data of the sample dynamic object at each moment may be obtained by identifying the sample dynamic object at each moment from the point cloud data and/or the vehicle attitude data at each moment by the dynamic object identification model. In some examples, if the sample dynamic object includes a sample vehicle and a sample pedestrian, the dynamic object trajectory model may include a sample vehicle trajectory identification model and a sample pedestrian trajectory identification model.

Step S12, encoding the object data of the sample static object and the object data of the sample dynamic object included in the driving environment of the sample vehicle at a plurality of moments encoded data of the sample static object and encoded data of the sample dynamic object included in the driving environment of the sample vehicle at a plurality of moments.

Exemplarily, the step S12 may include converting the object data of the sample static object and the object data of the sample dynamic object included in the driving environment of the sample vehicle at each moment into the encoded data of the sample static object and the encoded data of the sample dynamic object represented by the explicit vector set, respectively.

In some examples, the object data of the sample vehicle may include four physical quantities having different physical meanings of attitude, position, acceleration, and velocity, and the relative positions between the four physical quantities may be arbitrary in the object data of the sample vehicle. Exemplarily, the explicit vector I1 representing the object data of the sample vehicle at a single time may include, not limited to, "attitude, position, acceleration, and velocity", "attitude, acceleration, position, and velocity", and "attitude, position, velocity and acceleration". The attitude, the position, the acceleration and the velocity in the explicit vector Ii represent an attitude value of the sample vehicle, a position value of the sample vehicle, an acceleration value of an acceleration magnitude of the sample vehicle, and a velocity value of a velocity magnitude of the sample vehicle, respectively.

In some examples, where the attitude, position, acceleration, and velocity values are represented by three-dimensional numerical values in the sample vehicle coordinate system, the explicit vector Ii is a 12-dimensional vector. For example, the explicit vector Ii may be "a1 a2 a3 a4 a5 a6 a7 a8 a9 a10 a11 a12".

An example will be described in which the explicit vector Ii is a relative position expressed by the attitude, the position, the acceleration, and the velocity. In the explicit vector $I_1$, a1, a2 and a3 are used to represent values corresponding to the attitude of the sample vehicle in three directions of X, Y and Z in the sample vehicle coordinate system; a4, a5 and a6 are used to represent the values corresponding to the positions of the sample vehicle in the X, Y and Z directions in the sample vehicle coordinate system; a7, a8 and a9 are used to represent the values corresponding to the accelerations of the sample vehicle in the three directions X, Y and Z in the sample vehicle coordinate system; a10, a11, a12 are used to represent values corresponding to the velocity of the sample vehicle in three directions of X, Y and Z in the sample vehicle coordinate system. In some examples, the origin of the sample vehicle coordinate system may be an intermediate point between two rear tires of the sample vehicle at a moment selected from a plurality of moments.

Exemplarily, the object data of the sample dynamic object at each moment may be encoded by an encoding algorithm, resulting in encoded data of the sample dynamic object represented by the set of display vectors, respectively. In some examples, the encoding algorithms include, but are not limited to, common neural network models and classical rule algorithms.

Step S13, reconstructing the encoded data of the sample static object included in the driving environment of the vehicle at a plurality of moments to obtain reconstructed data of the sample static object included in the driving environment of the vehicle.

Exemplarily, the step S13 is implemented in a manner similar to that of the step S3, which will not be described in detail herein.

Step S14, performing logical reasoning on the reconstructed data of the sample static object included in the driving environment of the sample vehicle to obtain sample logical layer data and a logical relationship between the reconstructed data of the sample static object and the sample logical layer data.

Exemplarily, the step S14 is implemented in a manner similar to step S4 and will not be described in detail herein.

Step S15, based on the sample logic layer data and the logical relationship between the reconstructed data of the sample static object and the sample logic layer data, performing scene segmentation on the reconstructed data of the sample static object and the encoded data of the sample dynamic object included in the driving environment of the sample vehicle at multiple moments to obtain the sample static scene data and the sample dynamic scene data;

Step 1502, determining first sample graph structure data, second sample graph structure data and sample environment nodes based on the sample static scene data and the sample dynamic scene data.

In some examples, for ease of presentation, the reconstructed data of a sample static object obtained by scene segmentation may be referred to as static object data. For example, the reconstructed data of the preset type of sample traffic sign, the reconstructed data of the sample environment static element, and the reconstructed data of the sample ground arrow may be referred to as the preset type of sample traffic sign data, the sample environment static element data, and the sample ground arrow data, respectively. The encoded data of the sample dynamic object obtained after the scene segmentation is referred to as trajectory data of the sample dynamic object.

In some embodiments, the step 1502 can include: determining the first sample graph structure data based on sample vehicle trajectory data at multiple moments in each set of sample dynamic scene data, sample ground arrow data, sample lane data and a connection relationship between sample lanes in the sample static scene data; determining the second sample graph structure data based on a preset type of sample traffic sign data and the group of preset type of sample traffic signs in each set of sample static scene data; determining multiple groups of environment nodes based on sample environment static element data in each group of sample static scene data.

In the disclosed embodiment, the sample static scene data and the sample dynamic scene data are determined by each set of the sample driving environment data. Therefore, the sample static scene data and the sample dynamic scene data can accurately reflect the sample static objects, the positional relationship of the sample static objects and the trajectories of each sample dynamic object in the sample driving environment. Furthermore, the first sample graph structure data, the second sample graph structure data and the sample environment node determined according to the sample static scene data and the dynamic scene data can also accurately reflect each sample static object, the position relationship of each sample static object and the trajectory of each sample dynamic object in the sample driving environment.

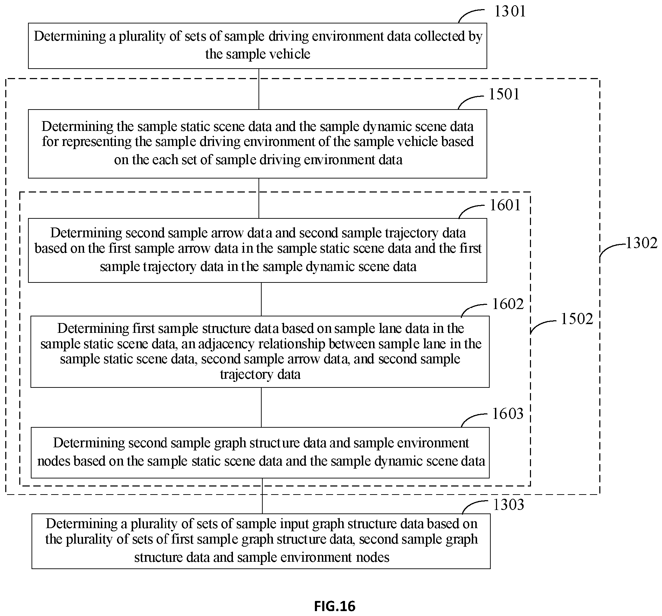

In some embodiments, as shown in Fig. 16, the step 1502 includes steps 1601 and 1602.

Step 1601, determining second sample arrow data and second sample trajectory data based on the first sample arrow data in the sample static scene data and the first sample trajectory data in the sample dynamic scene data.

Exemplarily, the first sample trajectory data may include trajectory data for a plurality of sample vehicles at various times collected by at least one vehicle and other trajectory data that may be significantly unrelated to the signal emitted by a particular type of signs.

The second sample trajectory data may be data obtained by washing the first sample trajectory data and filtering out trajectory data significantly unrelated to the signal emitted by the preset type of traffic sign. In some examples, the washing of the first sample trajectory data may not only filter illegal driving trajectory data and erroneous correlation data, etc. but also trajectory data of a vehicle in a vehicle-jam scene based on dynamic obstacles.

Exemplarily, the second sample trajectory data may include trajectory data for a plurality of sample vehicles at each moment collected by at least one vehicle.

Exemplarily, since the manner in which the second sample arrow data is determined is similar to the manner in which the second arrow data is determined, no further description is provided herein.

Step 1602, determining first sample structure data based on sample lane data in the sample static scene data, an adjacency relationship between sample lanes in the sample static scene data, second sample arrow data, and second sample trajectory data.

In some embodiments, a plurality of sample lane nodes for representing a plurality of sample lanes may be determined based on the sample lane data, the second sample trajectory data, and the second sample arrow data. A plurality of sets of first sample graph structure data are determined based on the adjacency relationships between the sample lanes and the plurality of sample lane nodes.

Exemplarily, the sample arrow information and the

trajectory information may be embedded into sample lane nodes to improve the performance of models such as neural networks.

Exemplarily, individual sample lane data may be first embedded and feature extracted to obtain corresponding sample lane nodes. Then, the second sample arrow data represented by the explicit vector and the second driving trajectory data represented by the set of explicit vectors are embedded and feature extracted to obtain the sample arrow information represented by the implicit vector and the trajectory information represented by the implicit vector. The sample arrow information represented by the implicit vector and the trajectory information represented by the implicit vector are then embedded into a sample lane node representing the corresponding sample lane.

In some embodiments, the sample arrow information is determined in the same manner as the arrow information is determined and will not be described in detail herein.

In some embodiments, the implementation of embedding and feature extracting trajectory data of a single vehicle represented by an explicit vector group to obtain single trajectory information represented by an implicit vector may include coding the time sequence information about the t explicit vectors into the 12-dimensional explicit vector group before the 12-dimensional explicit vector group is embedded and feature extraction is performed to obtain an explicit vector group with an increased dimension if the driving trajectory data of the vehicle is a 12-dimensional explicit vector group composed of t explicit vectors with a dimension of 12 (one explicit vector with a dimension of 12 corresponds to the trajectory data of an autonomous vehicle at a moment) having a time sequence. For example, a set of 14-dimensional explicit vectors is obtained. Then, the set of 14-dimensional explicit vectors is embedded and further extracted by a feature extraction module with multi-headed attention mechanism to obtain an implicit vector representing the driving trajectory of the single vehicle.

Exemplarily, the feature extraction module may include at least two layers of feature extraction networks. For example, the feature extraction module may include first to $k^{th}$ layer of feature extraction networks. Herein, the first layer feature extraction network is used for embedding a 14-dimensional explicit vector set so as to convert the 14-dimensional explicit vector set into an implicit vector group. The second to $k^{th}$ layer feature extraction networks are used for performing deep feature extraction on the set of implicit vectors generated by the first layer of feature extraction networks, so as to obtain an implicit vector for representing the driving trajectory of the host vehicle. In the deep feature extraction, the multi-attention can be used to learn attention weight to combat noise and improve generalization. K is an integer greater than or equal to 2.

In some examples, the feature extraction module may include and be limited to multi-layer perceptrons, Long Short-Term Memory (LSTM) and Gated Recurrent Unit (GRU).

Exemplarily, after embedding and feature extracting the trajectory data of each sample vehicle, the obtained trajectory information of vehicles in the same lane can be feature-aggregated to obtain the trajectory information to be embedded in each lane.

In some examples, the ways of feature aggregation may include, but are not limited to, using LSTM, stitching, average pooling, and maximum pooling.

Step 1603, determining second sample graph structure data and sample environment nodes based on the sample static scene data and the sample dynamic scene data.

Exemplarily, the preset type of sample nodes for representing a preset type of sample traffic sign may be determined based on a preset type of sample flag data in the sample static scene data. The second sample graph structure data is determined based on the preset type of sample nodes and the group of preset types of sample traffic signs in the sample static scene data. In some instances, the manner in which the second sample graph structure data is determined is similar to the manner in which the second graph structure data is determined and will not be described in detail herein.

Exemplarily, the sample environment nodes may be determined based on sample environment static element data in the sample static scene data and sample environment dynamic element data in the sample dynamic scene data.

In the disclosed embodiment, since the sample lane node is determined according to the sample lane data, the second sample trajectory data and the second sample arrow data, and the sample lane node is superimposed with the sample lane information, the sample trajectory information and the sample arrow information, the lane information represented by the sample lane node can accurately reflect the sample lane in the sample driving environment. Furthermore, the first sample graph structure data determined according to the sample lane node and the adjacent relationship can also accurately reflect each sample lane and the adjacent relationship between each sample lane in the sample driving environment.

In the embodiment of the present disclosure, by washing the first sample arrow data and the first sample trajectory data to obtain the second sample arrow data and the second sample trajectory data, irrelevant arrow data and trajectory data can be filtered out, the workload of subsequent embedding and feature extraction can be reduced, and at the same time, the dimension of a sample lane node is reduced, which is beneficial to simplifying the first sample graph structure data.

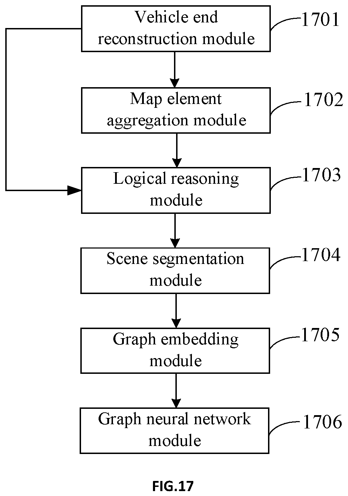

As shown in Fig. 17, the above-mentioned steps S11 and S12 can be performed by the vehicle end reconstruction module 1701 located at the vehicle end, and the encoded data of the encoded sample dynamic object is transmitted to the logical reasoning module 1703. At the same time, the encoded data of the sample static object obtained after encoding is transmitted to a map element aggregation module 1702. Step S13 is performed by the map element aggregation module 1702 and the resulting reconstructed data of the static object is passed to the logical reasoning module 1703. Step S14 is performed by the logical reasoning module 1703, and the obtained sample logical layer data and the logical relationship between the encoded data of each sample static object and the sample logical layer data are transferred to the scene segmentation module 1704. The scene segmentation module 1704 performs the step S15, and passes the obtained sample static scene data and the sample dynamic scene data to the operational graph embedding module 1705. The graph embedding module 1705 generates first sample graph structure data, second sample graph structure data and sample environment nodes according to the sample static scene data and the sample dynamic scene data, generates multiple sets of sample input graph structure data according to the sample first graph structure data, the sample second graph structure data and the sample environment nodes, and finally transmits the obtained multiple groups of sample input graph structure data to the neural network module 1706.

In some examples, the graph neural network module 1706 may include a data verification editing module and a truth-value annotation module as needed in the model training. The data verification and editing module is used to provide a manual checking and editing access when the accuracy of the graph neural network model predicting the association relationship the preset type of traffic sign and the lane is not high enough at the early stage of model training. The truth tagging module is used to annotate truth-value data in the model training.

An implementation of determining a plurality of sets of first sample graph structure data, second sample graph structure data and environment nodes from a plurality of scene data at a cloud end may refer to the above-mentioned step 1002, and an implementation of determining a plurality of input graph structure data may refer to an implementation step 1101 to step 1103 of step 2022 as shown in Fig. 11, and the description thereof will not be repeated here.

After determining a plurality of sets of sample input graph structure data, and a sample association relationship between a preset type of sample traffic sign among multiple sample traffic signs corresponding to the sample graph structure data and a sample lane, each set of sample input graph structure data may be input into an initial graph neural network model to obtain a predicted association relationship between the preset type of sample traffic sign and the sample lane. Then, the trained neural network prediction model is obtained by iteratively training the initial graph neural network model based on the predicted association relationship and taking the sample association relationship as supervised information. The trained graph neural network model can accurately predict the association relationship between the preset type of traffic signs and the lane.

The training process for the graph neural network model is described below via the steps 1202 and 1203.

Step 1202, processing the sample input graph structure data based on an initial graph neural network model to obtain a predicted association relationship between the preset type of sample traffic sign and the sample lane.

Exemplarily, the predicted association between the preset type of sample traffic sign and the sample lane include predicted association relationship between the preset type of sample traffic sign and the sample lane in the sample input graph structure data.

Exemplarily, after obtaining the predictive association relationship between the preset type of sample traffic sign and the sample lane, a loss value may be determined according to the predictive association relationship between the preset type of sample traffic sign and the sample lane and the sample association relationship between the preset type of sample traffic sign and the sample lane, and the initial graph neural network model may be iteratively updated according to the loss value to obtain a trained graph neural network model.

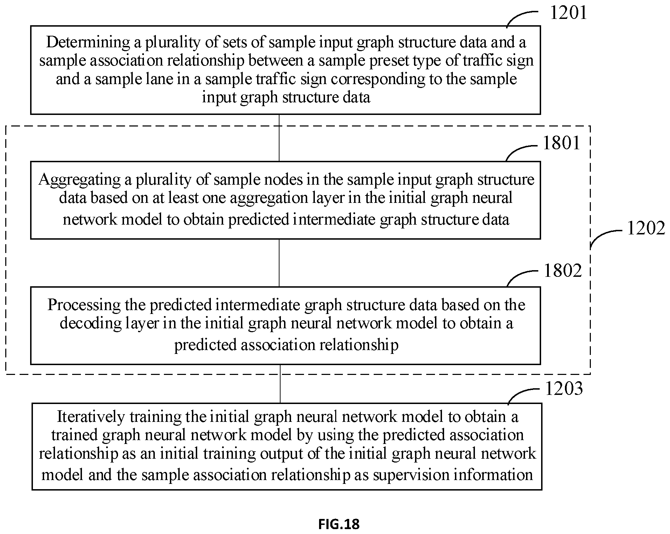

In some embodiments, described above with reference to Fig. 18 in conjunction with Fig. 5, the step 1202 may include steps 1801 and 1802.

Step 1801, aggregating a plurality of sample nodes in the sample input graph structure data based on at least one aggregation layer in the initial graph neural network model to obtain predicted intermediate graph structure data.

Herein, the plurality of sample nodes includes a sample sign node for representing a sample traffic sign and a sample lane node for representing a sample lane.

Step 1802, processing the predicted intermediate graph structure data based on a decoding layer in the initial graph neural network model to obtain the predicted association relationship.

In some embodiments, the step 1801 includes: performing local information aggregation on the plurality of nodes based on a first encoding layer of the aggregation layer to obtain predicted first sub-graph structure data; performing global information aggregation on the plurality of nodes after local information aggregation in the predicted first sub-graph structure data based on a second encoding layer of the aggregation layer to obtain predicted second sub-graph structure data; and determining the predicted intermediate graph structure data based on the predicted second sub-graph structure data.

Exemplarily, specific implementations of the above-described steps 1801 and 1802 may refer to the aforementioned steps 2031 and 2032, which are not described in detail herein.

Step 1203, iteratively training the initial graph neural network model to obtain a trained graph neural network model by using the predicted association relationship as an initial training output of the initial graph neural network model and the sample association relationship as supervision information

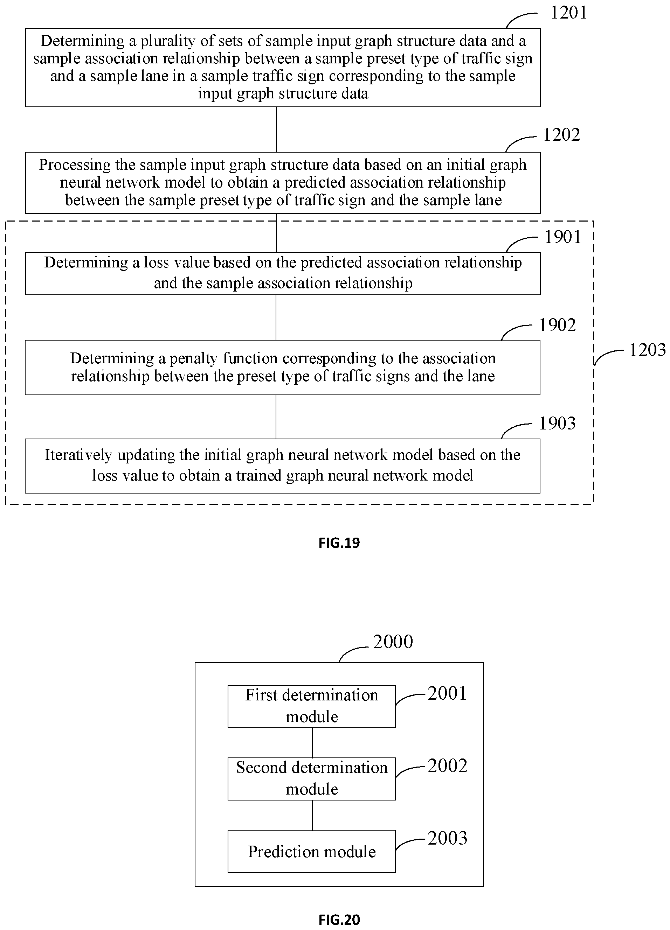

In some embodiments, as shown in Fig. 19, the step 1203 may include steps 1901 to 1903.

Step 1901, determining a loss value based on the predicted association relationship and the sample association relationship.

Exemplarily, a difference between a first value representing a predicted association relationship and a second value representing a sample association relationship may be determined as a loss value. In some examples, a first value representing a predicted association relationship and a second value representing a sample association relationship may be determined in a custom manner.

Step 1902, determining a penalty function corresponding to the association relationship between the preset type of traffic signs and the lane.

In some embodiments, the penalty function may be expressed as:

$$\varnothing = L_{\text{edge}} + \alpha * L_{\text{node}} + \beta * L_{\text{cross}} \qquad (1);$$

Where $\varnothing$ is a penalty function; $L_{\text{edge}}$ is a binary cross-entropy loss function BCE (A, A ^); $L_{\text{node}}$ s a cross-entropy loss function CE (Y, Y ^); $L_{\text{cross}}$ is $\|M * N\|_1$; A is a connection matrix between a lane node and a traffic sign node, and A ^ is the true value of A; Y is the output graph structure data; Y ^ is the true value of Y; M is a cross-correlation matrix constructed with the edge information of the input graph structure data; N is a query matrix expanded by A having a same dimension as that of M. $\alpha$ and $\beta$ are the weight factors.

Step 1903, iteratively updating the initial graph neural network model based on the loss value to obtain the trained graph neural network model.

The map neural network prediction method according to an embodiment of the present disclosure continuously iteratively optimizes a graph neural network model by a penalty function corresponding to a loss value and an association relationship between a preset type of traffic sign and a lane, so as to ensure that the trained graph neural network model can accurately predict the association relationship between the preset type of traffic sign and the lane.

In some embodiments of the present disclosure, if the plurality of sets of sample driving environment data are driving environment data of vehicles in a certain area, after obtaining the trained graph neural network model by the training method of the graph neural network model, any vehicle driving in the certain area may determine the association relationship between the lane and the preset type of traffic sign based on the trained graph neural network model.

In some examples, after obtaining the trained graph neural network model, an association relationship between a lane and a preset type of traffic sign in the above-mentioned area may be determined according to the trained graph neural network model, and the association relationship may be stored in a database of a cloud. If the association relationship stored in the database may be issued to the vehicle end, the vehicle end may search for the association relationship in real time according to the driving position of the vehicle so as to determine the preset type of traffic sign associated with the lane on which the vehicle is driving in real time.

In some embodiments, after issuing the association relationship stored in the database to the vehicle end, the association relationship between the lane and the preset type of traffic sign may also be acquired by other means, and the target association relationship may be determined according to the association relationship acquired by other means and the association relationship determined in real time according to the driving position of the vehicle. In some examples, it may be determined whether the association relationship obtained by the other means is the same as the association relationship determined in real time according to the running position of the vehicle, and the target association relationship may be determined according to the determination result. If they are the same, the association relationship is determined as a target association relationship; if not, an alert message may be issued or the association relationship re-determined.

In some embodiments, after training an initial graph neural network model based on driving environment data of a vehicle in a certain area to obtain a trained graph neural network model, according to the trained graph neural network model, it is possible to predict an association relationship between a lane drived by a vehicle driving in another area and a preset type of traffic sign.

For example, after training the initial graph neural network model based on the driving environment data of the vehicle in the area A to obtain the trained graph neural network model, the trained graph neural network model stored in the cloud may be issued to the vehicle in the area B, and the vehicle in the area B predicts in real time a preset type of traffic sign associated with a lane on which the vehicle is driving according to the trained graph neural network model.

For another example, after training the initial graph neural network model based on the driving environment data of the vehicles in the area A to obtain the trained graph neural network model, the driving environment data of the vehicles in the area B may be uploaded to the cloud to process the driving environment data of the vehicles in the area B by the trained graph neural network model stored in the cloud so as to obtain the association relationship between the lane in the area B and the preset type of traffic sign. If the association relationship of the B area is issued to the vehicle of the area B, the vehicle of the area B may search the association relationship of the area B in real time according to the driving position thereof, and determine the preset type of traffic sign associated with the lane on which the vehicle is driving in real time.

Exemplary device

Fig. 20 is a schematic composition structure diagram of an apparatus for predicting an association relationship between a sign and a lane according to an exemplary embodiment of the present disclosure. As shown in Fig. 20, the apparatus 2000 for predicting the association relationship between a sign with a lane includes a first determination module 2001, a second determination module 2002, and a prediction module 2003.

The first determination module 2001 is configured for determining driving environment data collected by a vehicle during driving process.

The second determination module 2002 is configured for determining input graph structure data representing an initial relationship between the a plurality of traffic signs and the lane based on the driving environment data.

The prediction module 2003 is configured for processing the input graph structure data based on a graph neural network model to obtain an association relationship between a preset type of traffic sign among the traffic signs and the lane

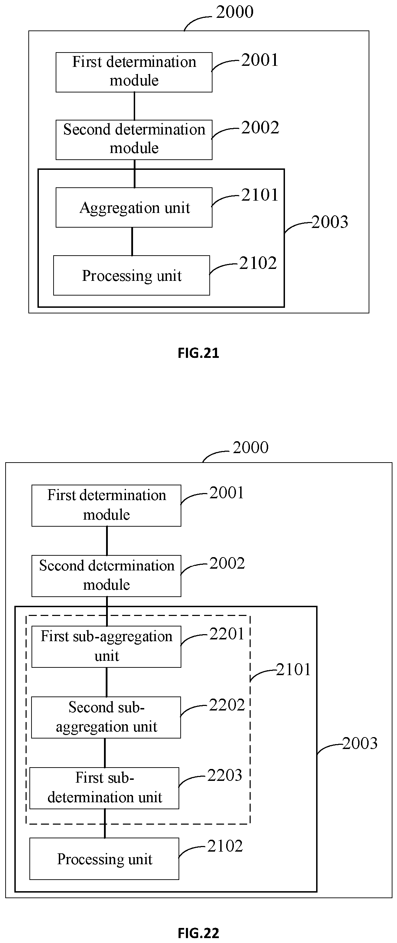

In some embodiments, as shown in Fig. 21, the prediction module 2003 in Fig. 20 includes an aggregation unit 2101 and a processing unit 2102.

The aggregation unit 2101 is configured for aggregating a plurality of nodes in the input graph structure data based on at least one aggregation layer in the graph neural network model to obtain intermediate graph structure data; wherein the plurality of nodes include a sign node for representing the traffic sign and a lane node for representing the lane.

The processing unit 2102 is configured for processing the intermediate graph structure data based on a decoding layer in the graph neural network model to obtain an association relationship between the preset type of traffic sign and the lane.

In some embodiments, as shown in Fig. 22, the aggregation unit 2101 in Fig. 21 includes a first sub-aggregation unit 2201, a second sub-aggregation unit 2202, and a first sub-determination unit 2203.

The first sub-aggregation unit 2201 is configured for processing the intermediate graph structure data based on a decoding layer in the graph neural network model to obtain an association relationship between the preset type of traffic sign and the lane.

The second sub-aggregation unit 2202 is configured for performing global information aggregation on the plurality of nodes after performing the local information aggregation in the first sub-graph structure data based on a second encoding layer in the aggregation layer to obtain second sub-graph structure data.

The first sub-determination unit 2203 is configured for determining the intermediate graph structure data based on the second sub-graph structure data.

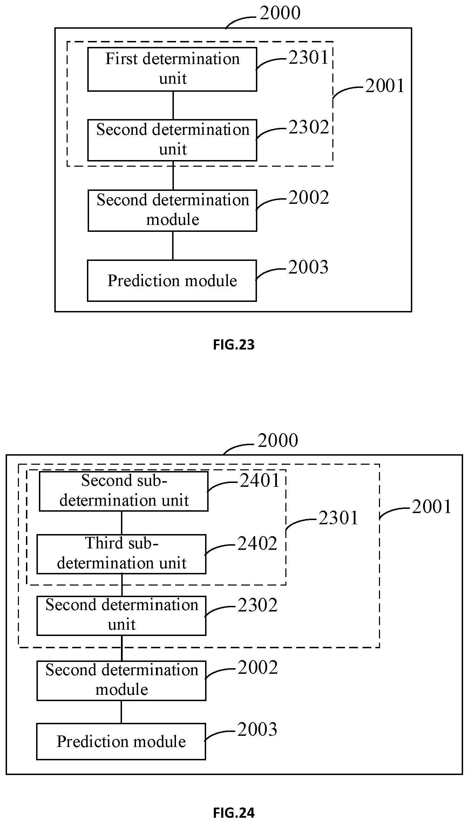

In some embodiments, as shown in Fig. 23, the first determination module 2001 includes a first determination unit 2301 and a second determination unit 2302.

The first determination unit 2301 is configured for determining, based on the driving environment data, first graph structure data representing an initial relationship among lanes, second graph structure data used for representing an initial relationship between respective preset type of traffic signs, and an environment node for representing an environment sign among the traffic signs, based on the driving environment data.

The second determination unit 2302 is configured for determining the input graph structure data based on the first graph structure data, the second graph structure data and the environment node.

In some embodiments, as shown in Fig. 24, the first determination unit 2301 includes a second sub-determination unit 2401 and a third sub-determination unit 2402.

The second sub-determination unit 2401 is configured for determining static scene data representing the driving environment of the vehicle based on the driving environment data.

The third sub-determination unit 2402 is configured for determining the first graph structure data, the second graph structure data and the environment node based on the static scene data.

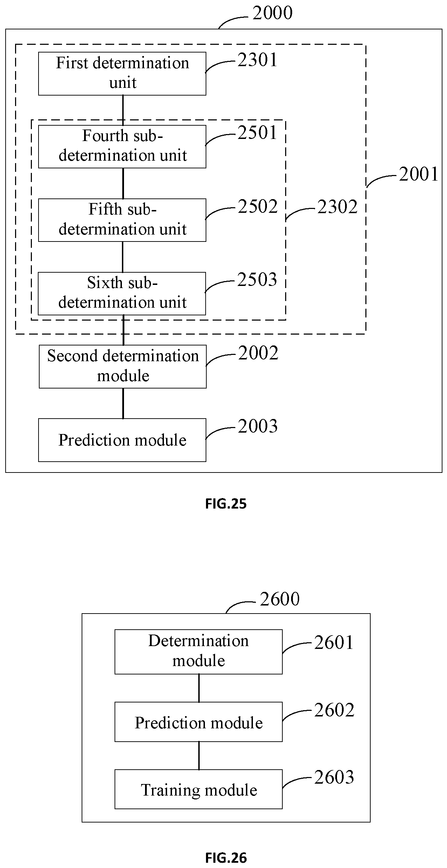

In some embodiments, as shown in Fig. 25, the second determination unit 2302 includes a fourth sub-determination unit 2501, a fifth sub-determination unit 2502, and a sixth sub-determination unit 2503.

The fourth sub-determination unit 2501 is configured for determining a first initial relationship between the environment node and each lane node in the first graph structure data and a second initial relationship between the environment node and each preset type of node in the second graph structure data.

The fifth sub-determination unit 2502 is configured for determining a third initial relationship between each of the lane nodes and each of the preset types of nodes.

The sixth sub-determination unit 2503 is configured for determining the input graph structure data based on the first initial relationship, the second initial relationship, and the third initial relationship.

Fig. 26 is a schematic composition structure diagram of a neural network model training apparatus according to an exemplary embodiment of the present disclosure. As shown in Fig. 26, the graph neural network model training apparatus 2600 includes a determination module 2601, a prediction module 2602, and a training module 2603.

The determination module 2601 is configured for determining a plurality of sets of sample input graph structure data and a sample association relationship between a sample preset type of traffic sign among sample traffic signs corresponding to the sample input graph structure data and a sample lane, wherein the sample input graph structure data is used to represent an initial relationship between the sample traffic sign and the sample lane.

The prediction module 2602 is configured for processing the sample input graph structure data based on an initial graph neural network model to obtain a predicted association relationship between the sample preset type of traffic sign and the sample lane.

The training module 2603 is configured for iteratively training the initial graph neural network model to obtain a trained graph neural network model by using the predicted association relationship determined by the prediction module 2602 as an initial training output of the initial graph neural network model and the sample association relationship as supervision information.

In some embodiments, the prediction module 2602 is specifically configured for aggregating a plurality of sample nodes in the sample input graph structure data based on at least one aggregation layer in the initial graph neural network model to obtain predicted intermediate graph structure data, wherein the plurality of sample nodes includes a sample sign node for representing a sample traffic sign and a sample lane node for representing a sample lane; and processing the predicted intermediate graph structure data based on the decoding layer in the initial graph neural network model to obtain a predicted association relationship

In some embodiments, the training module 2603 is specifically configured for determining a loss value based on the predicted association relationship and the sample association relationship; and iteratively updating the initial graph neural network model based on the loss value to obtain a trained graph neural network model.

Exemplary electronic device

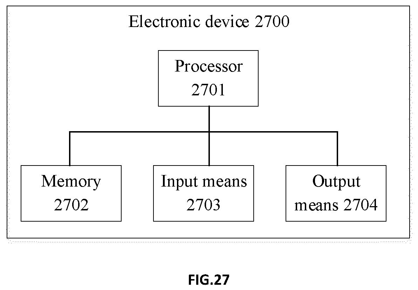

Fig. 27 is a structure diagram of an electronic device according to an exemplary embodiment of the present disclosure. As shown in Fig. 27, the electronic device 2700 includes at least one processor 2701 and a memory 2702.

The processor 2701 may be a central processing unit (CPU) or other form of processing unit having data processing capabilities and/or instruction execution capabilities, and may control other components in the electronic device 2300 to perform desired functions.

The memory 2702 may include one or more computer program products, which may include various forms of computer-readable storage media, such as volatile memory and/or non-volatile memory. The volatile memory may include, for example, a random access memory (RAM) and/or a cache, etc. The non-volatile memory may include, for example, a read-only memory (ROM), a hard disk, a flash memory, etc. One or more computer program instructions may be stored on the computer readable storage medium. The processor 2701 may execute the one or more computer program instructions to perform the method for predicting the association relationship between a sign and a lane, the graph neural network model training method, and/or other desired functions of the various embodiments of the present disclosure above.

In one example, the electronic device 2700 may further include an input means 2703 and an output means 2704, these components being interconnected via a bus system and/or other forms of connection means (not shown).

Of course, for simplicity, only some of the components of the electronic device 2700 relevant to the present disclosure are shown in Fig. 27, omitting components such as buses, input/output interfaces, etc. In addition, the electronic device 2700 may include any other suitable components depending on the particular application.

Exemplary computer program product and computer-readable storage medium

In addition to the methods and apparatus described above, embodiments of the present disclosure may also provide a computer program product including computer program instructions which, when executed by a processor, cause the processor to perform the steps in the method for predicting an association relationship between a sign and a lane or the graph neural network model training method according to various embodiments of the present disclosure described in the "Exemplary Methods" section above.

In addition, embodiments of the present disclosure also provide a computer-readable storage medium having stored thereon computer program instructions which, when executed by a processor, cause the processor to perform the steps in method for predicting an association relationship between a sign and a lane or the graph neural network model training method according the various embodiments of the present disclosure described in the "Exemplary Methods" section above.

The computer-readable storage medium may take any combination of one or more readable media. The readable medium may be a readable signal medium or a readable storage medium. The readable storage medium is exemplified by, but not limited to, an electronic, magnetic, optical, electromagnetic, infrared, or semiconductor system, an apparatus, or a device, or any combination thereof. More specific examples (a non-exhaustive list) of the readable storage media include: an electrical connection having one or more wires, a portable disk, a hard disk, a random access memory (RAM), a read-only memory (ROM), an erasable programmable read only memory (EPROM, or flash memory), an optical fiber, a portable compact disk read-only memory (CD-ROM), an optical storage device, a magnetic storage device, or any suitable combination thereof.

The general principles of the present disclosure have been described above in connection with specific embodiments. However, the advantages, advantages, effects, etc. mentioned in the present disclosure are merely exemplary and not limiting, and must not be construed as being required by the various embodiments of the present disclosure. Furthermore, the particular details disclosed above are for purposes of illustration and description only and are not intended to be limiting, as the disclosure is not limited to the particular details disclosed above.

Those skilled in the art can make various modifications and variations in the present disclosure without departing from the spirit or scope of the present disclosure. Thus, it is intended that the present invention cover the modifications and variations of this application provided they come within the scope of the appended claims and their equivalents.

**Claims**

1. A method for predicting an association relationship between a traffic sign and a lane, comprising:

   determining (201) driving environment data collected by a vehicle during driving process;
   determining (202) input graph structure data representing an initial relationship between a plurality of traffic signs and the lane based on the driving environment data; and
   processing (203) the input graph structure data based on a graph neural network model to obtain the association relationship between a preset type of traffic sign among the traffic signs and the lane.

2. The method according to claim 1, wherein the processing the input graph structure data based on a graph neural network model to obtain the association relationship between a preset type of traffic sign among the traffic signs and the lane comprises:

   aggregating (2031) a plurality of nodes in the input graph structure data based on at least one aggregation layer in the graph neural network model to obtain intermediate graph structure data, wherein the plurality of nodes include sign nodes for representing the traffic signs and a lane node for representing the lane; and
   processing (2032) the intermediate graph structure data based on a decoding layer in the graph neural network model to obtain the association relationship between the preset type of traffic sign and the lane.

3. The method according to claim 2, wherein the aggregating a plurality of nodes in the input graph structure data based on at least one aggregation layer in the graph neural network model to obtain intermediate graph structure data comprises:

> performing (601) local information aggregation on the plurality of nodes based on a first encoding layer of the aggregation layer to obtain first sub-graph structure data;
> performing (602) global information aggregation on the plurality of nodes after local information aggregation in the first sub-graph structure data based on a second encoding layer of the aggregation layer to obtain second sub-graph structure data; and
> determining (603) the intermediate graph structure data based on the second sub-graph structure data.

4. The method according to any one of claims 1 to 3, wherein the determining input graph structure data representing an initial relationship between the plurality of traffic signs and the lane based on the driving environment data comprises:

> determining (2021), based on the driving environment data, first graph structure data representing an initial relationship between lanes, second graph structure data representing an initial relationship between preset types of traffic signs, and an environment node representing an environment sign among the traffic signs; and
> determining (2022) the input graph structure data based on the first graph structure data, the second graph structure data, and the environment node.

5. The method according to claim 4, wherein the determining, based on the driving environment data, first graph structure data representing an initial relationship between lanes, second graph structure data representing an initial relationship between preset type of traffic signs, and an environment node representing an environment sign among the traffic signs comprises:

> determining (1001) static scene data representing driving environment of the vehicle based on the driving environment data; and
> determining (1002) the first graph structure data, the second graph structure data and the environment node based on the static scene data.

6. The method according to claim 4 or 5, wherein the determining the input graph structure data based on the first graph structure data, the second graph structure data, and the environment node comprises:

determining (1101) a first initial relationship between the environment node and each lane node in the first graph structure data and a second initial relationship between the environment node and each preset type of node in the second graph structure data;
determining (1102) a third initial relationship between each lane node and each preset type of node; and
determining (1103) the input graph structure data based on the first initial relationship, the second initial relationship, and the third initial relationship.

7. A method for training a graph neural network model, comprising:

> determining (1201) a plurality of sets of sample input graph structure data and a sample association relationship between a preset type of sample traffic sign among sample traffic signs corresponding to the sample input graph structure data and a sample lane, wherein the sample input graph structure data is used to represent an initial relationship between the sample traffic sign and the sample lane;
> processing (1202) the sample input graph structure data based on an initial graph neural network model to obtain a predicted association relationship between the preset type of sample traffic sign and the sample lane; and
> iteratively training (1203) the initial graph neural network model to obtain a trained graph neural network model by using the predicted association relationship as an initial training output of the initial graph neural network model and the sample association relationship as supervision information.

8. The method according to claim 7, wherein the processing the sample input graph structure data based on an initial graph neural network model to obtain a predicted association relationship between the sample preset type of traffic sign and the sample lane comprises:

> aggregating (2031) a plurality of sample nodes in the sample input graph structure data based on at least one aggregation layer in the initial graph neural network model to obtain predicted intermediate graph structure data, wherein the plurality of sample nodes includes sample sign nodes for representing the sample traffic signs and a sample lane node for representing the sample lane; and
> processing (2032) the predicted intermediate graph structure data based on a decoding layer in the initial graph neural network model to obtain the predicted association relationship.

9. The method according to claim 7 or 8, wherein the iteratively training the initial graph neural network model to obtain a trained graph neural network model by using the predicted association relationship as an initial training output of the initial graph neural network model and the sample association relationship as supervision information comprises:

determining (1901) a loss value based on the predicted association relationship and the sample association relationship; and
iteratively updating (1903) the initial graph neural network model based on the loss value to obtain the trained graph neural network model.

10. An apparatus for predicting an association relationship between a sign and a lane, comprising:

a first determination module (2001) configured for determining driving environment data collected by a vehicle during driving process;
a second determination module (2002) configured for determining input graph structure data representing an initial relationship between a plurality of traffic signs and the lane based on the driving environment data; and
a prediction module (2003) configured for processing the input graph structure data based on a graph neural network model to obtain the association relationship between a preset type of traffic sign among the traffic signs and the lane.

11. The apparatus according to claim 10, wherein the prediction module (2003) includes:

an aggregation unit (2101) configured for aggregating a plurality of nodes in the input graph structure data based on at least one aggregation layer in the graph neural network model to obtain intermediate graph structure data; and
a processing unit (2102) configured for processing the intermediate graph structure data based on a decoding layer in the graph neural network model to obtain an association relationship between the preset type of traffic sign and the lane.

12. The apparatus according to claim 11, wherein the aggregation unit (2101) includes:

a first sub-aggregation unit (2201), configured for processing the intermediate graph structure data based on a decoding layer in the graph neural network model to obtain an association relationship between the preset type of traffic sign and the lane;
a second sub-aggregation unit (2202), configured for performing global information aggregation on the plurality of nodes after performing the local information aggregation in the first sub-graph structure data based on a second encoding layer in the aggregation layer to obtain second sub-graph structure data; and
a first sub-determination unit (2203), configured for determining the intermediate graph structure data based on the second sub-graph structure data.

13. A graph neural network model training apparatus, comprising:

a determination module (2601) configured for determining a plurality of sets of sample input graph structure data and a sample association relationship between a preset type of sample traffic sign among sample traffic signs corresponding to the sample input graph structure data and a sample lane, wherein the sample input graph structure data is used to represent an initial relationship between the sample traffic signs and the sample lane;
a processing module (2602) configured for processing the sample input graph structure data based on an initial graph neural network model to obtain a predicted association relationship between the preset type of sample traffic sign and the sample lane; and
a training module (2603) configured for iteratively training the initial graph neural network model to obtain a trained graph neural network model by using the predicted association relationship as an initial training output of the initial graph neural network model and the sample association relationship as supervision information.

14. A computer-readable storage medium storing a computer program for executing the method for predicting an association relationship between a sign and a lane according to any one of claims 1 to 6 or the method for training a graph neural network model according to any one of claims 7 to 9.

15. An electronic device, comprising:

a processor (2701); and
a memory (2702) configured for storing processor-executable instructions;
wherein the processor (2701) is configured for reading the executable instructions from the memory and executing the instructions to implement the method for predicting an association relationship between a sign and a lane according to any one of claims 1-6, or the method for training a graph neural network model according to any one of claims 7-9.

**FIG.1**

| 201 |
| Determining driving environment data collected by the vehicle during driving process |

| 202 |
| Determining input graph structure data representing an initial relationship between traffic signs and a lane based on the driving environment data |

| 203 |
| Processing the input graph structure data based on a graph neural network model to obtain an association relationship between a preset type of traffic sign in the traffic signs and the lane |

**FIG.2**

FIG.3

FIG.4

201

Determining driving environment data collected by the vehicle during driving process

202

Determining input graph structure data representing an initial relationship between traffic signs and a lane based on the driving environment data

2031

Aggregating a plurality of nodes in the input graph structure data based on at least one aggregation layer in the graph neural network model to obtain intermediate graph structure data

203

2032

Processing the intermediate graph structure data based on a decoding layer in the graph neural network model to obtain an association relationship between the preset type of traffic sign and the lane

FIG.5

Determining driving environment data collected by the vehicle during driving process
— 201

Determining input graph structure data representing an initial relationship between traffic signs and a lane based on the driving environment data
— 202

Performing local information aggregation on the plurality of nodes based on a first encoding layer in the aggregation layer to obtain first sub-graph structure data
— 601

Performing global information aggregation on the plurality of nodes after the local information aggregation in the first sub-graph structure data based on a second encoding layer in the aggregation layer to obtain second sub-graph structure data
— 602

— 2031

— 203

Determining the intermediate graph structure data based on the second sub-graph structure data
— 603

Processing the intermediate graph structure data based on a decoding layer in the graph neural network model to obtain an association relationship between the preset type of traffic sign and the lane
— 2032

FIG.6

201

Determining driving environment data collected by the vehicle during driving process

2021

Determining, based on the driving environment data, first graph structure data used for representing an initial relationship among a lane, second graph structure data representing an initial relationship among preset type of traffic signs, and an environment node representing an environment sign in the traffic sign

202

2022

Determining the input graph structure data based on the first graph structure data, the second graph structure data, and the environment node

203

Processing the input graph structure data based on a graph neural network model to obtain an association relationship between a preset type of traffic sign in the traffic signs and the lane

FIG.7

801    803

8012    8023

802

FIG.8

901    904

9012    9045

902    9023    903    905

FIG.9

Determining driving environment data collected by the vehicle during driving process — 201

Determining static scene data representing the driving environment of the vehicle based on the driving environment data — 1001

Determining the first graph structure data, the second graph structure data and the environment node based on the static scene data — 1002

— 2021

Determining the input graph structure data based on the first graph structure data, the second graph structure data, and the environment node — 2022

— 202

Processing the input graph structure data based on a graph neural network model to obtain an association relationship between a preset type of traffic sign in the traffic signs and the lane — 203

**FIG.10**

201

Determining driving environment data collected by the vehicle during driving process

2021

Determining, based on the driving environment data, first graph structure data used for representing an initial relationship among a lane, second graph structure data representing an initial relationship among preset type of traffic signs, and an environment node representing an environment sign in the traffic sign

1101

Determining a first initial relationship between the environment node and each lane node in the first graph structure data and a second initial relationship between the environment node and each preset type of node in the second graph structure data

202

1102

Determining a third initial relationship between each of the lane nodes and each of the preset type of nodes

2022

1103

Determining the input graph structure data based on the first initial relationship, the second initial relationship, and the third initial relationship

203

Processing the input graph structure data based on a graph neural network model to obtain an association relationship between a preset type of traffic sign in the traffic signs and the lane

**FIG.11**

1201

Determining a plurality of sets of sample input graph structure data and a sample association relationship between a sample preset type of traffic sign and a sample lane in a sample traffic sign corresponding to the sample input graph structure data

1202

Processing the sample input graph structure data based on an initial graph neural network model to obtain a predicted association relationship between the sample preset type of traffic sign and the sample lane

1203

Iteratively training the initial graph neural network model to obtain a trained graph neural network model by using the predicted association relationship as an initial training output of the initial graph neural network model and the sample association relationship as supervision information

**FIG.12**

1301

Determining a plurality of sets of sample driving environment data collected by the sample vehicle

1302

Determining, based on each set of sample driving environment data, first sample graph structure data used for representing an initial relationship between each sample lane, second sample graph structure data used for representing an initial relationship between preset type of traffic signs of each sample, and a sample environment node for representing a sample environment sign

1303

Determining a plurality of sets of sample input graph structure data based on the plurality of sets of first sample graph structure data, second sample graph structure data and sample environment nodes

**FIG.13**

1301

Determining a plurality of sets of sample driving environment data collected by the sample vehicle

1302

1401

Determining the sample static scene data representing the sample driving environment of the sample vehicle based on the each set of sample driving environment data

1402

Determining first sample graph structure data, second sample graph structure data and sample environment nodes based on the sample static scene data

1303

Determining a plurality of sets of sample input graph structure data based on the plurality of sets of first sample graph structure data, second sample graph structure data and sample environment nodes

**FIG.14**

1301

Determining a plurality of sets of sample driving environment data collected by the sample vehicle

1302

1501

Determining the sample static scene data and the sample dynamic scene data for representing the sample driving environment of the sample vehicle based on the each set of sample driving environment data

1502

Determining first sample graph structure data, second sample graph structure data and sample environment nodes based on the sample static scene data and the sample dynamic scene data

1303

Determining a plurality of sets of sample input graph structure data based on the plurality of sets of first sample graph structure data, second sample graph structure data and sample environment nodes

**FIG.15**

Determining a plurality of sets of sample driving environment data collected by the sample vehicle — 1301

Determining the sample static scene data and the sample dynamic scene data for representing the sample driving environment of the sample vehicle based on the each set of sample driving environment data — 1501

Determining second sample arrow data and second sample trajectory data based on the first sample arrow data in the sample static scene data and the first sample trajectory data in the sample dynamic scene data — 1601

Determining first sample structure data based on sample lane data in the sample static scene data, an adjacency relationship between sample lane in the sample static scene data, second sample arrow data, and second sample trajectory data — 1602

Determining second sample graph structure data and sample environment nodes based on the sample static scene data and the sample dynamic scene data — 1603

1502

1302

Determining a plurality of sets of sample input graph structure data based on the plurality of sets of first sample graph structure data, second sample graph structure data and sample environment nodes — 1303

**FIG.16**

Vehicle end
reconstruction module —1701

Map element
aggregation module —1702

Logical reasoning
module —1703

Scene segmentation
module —1704

Graph embedding
module —1705

Graph neural network
module —1706

FIG.17

1201

Determining a plurality of sets of sample input graph structure data and a sample association relationship between a sample preset type of traffic sign and a sample lane in a sample traffic sign corresponding to the sample input graph structure data

1801

Aggregating a plurality of sample nodes in the sample input graph structure data based on at least one aggregation layer in the initial graph neural network model to obtain predicted intermediate graph structure data

1202

1802

Processing the predicted intermediate graph structure data based on the decoding layer in the initial graph neural network model to obtain a predicted association relationship

1203

Iteratively training the initial graph neural network model to obtain a trained graph neural network model by using the predicted association relationship as an initial training output of the initial graph neural network model and the sample association relationship as supervision information

**FIG.18**

1201

Determining a plurality of sets of sample input graph structure data and a sample association relationship between a sample preset type of traffic sign and a sample lane in a sample traffic sign corresponding to the sample input graph structure data

1202

Processing the sample input graph structure data based on an initial graph neural network model to obtain a predicted association relationship between the sample preset type of traffic sign and the sample lane

1901

Determining a loss value based on the predicted association relationship and the sample association relationship

1902

Determining a penalty function corresponding to the association relationship between the preset type of traffic signs and the lane

1203

1903

Iteratively updating the initial graph neural network model based on the loss value to obtain a trained graph neural network model

**FIG.19**

2000

First determination module    2001

Second determination module    2002

Prediction module    2003

**FIG.20**

2000

First determination module —2001

Second determination module —2002

Aggregation unit —2101

Processing unit —2102

—2003

**FIG.21**

2000

First determination module —2001

Second determination module —2002

First sub-aggregation unit —2201

Second sub-aggregation unit —2202

—2101

First sub-determination unit —2203

—2003

Processing unit —2102

**FIG.22**

2000

First determination unit —2301

Second determination unit —2302

2001

Second determination module —2002

Prediction module —2003

**FIG.23**

2000

Second sub-determination unit —2401

Third sub-determination unit —2402

2301

2001

Second determination unit —2302

Second determination module —2002

Prediction module —2003

**FIG.24**

2000

First determination unit ⌐2301

Fourth sub-determination unit ⌐2501

Fifth sub-determination unit ⌐2502 ⌐2302

Sixth sub-determination unit ⌐2503

⌐2001

Second determination module ⌐2002

Prediction module ⌐2003

**FIG.25**

2600

Determination module ⌐2601

Prediction module ⌐2602

Training module ⌐2603

**FIG.26**

Electronic device 2700

Processor
2701

Memory
2702

Input means
2703

Output
means 2704

FIG.27

Europäisches
Patentamt

European
Patent Office

Office européen
des brevets

# EUROPEAN SEARCH REPORT

**Application Number**

EP 24 20 6066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO YUNFEI ET AL: "Visual Traffic Knowledge Graph Generation from Scene Images", 2023 IEEE/CVF INTERNATIONAL CONFERENCE ON COMPUTER VISION (ICCV), IEEE, 1 October 2023 (2023-10-01), pages 21547-21556, XP034515876, DOI: 10.1109/ICCV51070.2023.01975 [retrieved on 2024-01-15] * sections 3. Dataset, 4. Approach, 5. Experiments; figures 1, 3 * | 1-15 | INV. G06V10/82 G06V10/86 G06V20/58 G06V20/56 |
| A | US 2022/153315 A1 (ZENG WENYUAN [CA] ET AL) 19 May 2022 (2022-05-19) * [0076]-[0080]; figures 3-5 * | 1-15 | |
| A | GAO JIYANG ET AL: "VectorNet: Encoding HD Maps and Agent Dynamics From Vectorized Representation", 2020 IEEE/CVF CONFERENCE ON COMPUTER VISION AND PATTERN RECOGNITION (CVPR), IEEE, 13 June 2020 (2020-06-13), pages 11522-11530, XP033805513, DOI: 10.1109/CVPR42600.2020.01154 [retrieved on 2020-08-03] * sections 3. VectorNet approach, 4. Experiments * | 1-15 | **TECHNICAL FIELDS SEARCHED (IPC)**  G06V |

The present search report has been drawn up for all claims

| Place of search | Date of completion of the search | Examiner |
|---|---|---|
| The Hague | 12 February 2025 | Markaki, Vasiliki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6066

This annex lists the patent family members relating to the patent documents cited in  the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | Publication date |
|---|---|---|---|
| US 2022153315 A1 | 19-05-2022 | CA 3139481 A1 | 17-05-2022 |
| | | US 2022153315 A1 | 19-05-2022 |
| | | US 2023347941 A1 | 02-11-2023 |

EPO FORM P0459

For more details about this annex : see Official Journal of the European Patent Office, No. 12/82